# EUROPÄISCHE PATENTSCHRIFT

(11) **EP 3 661 943 B1**
(45) Veröffentlichungstag und Bekanntmachung des Hinweises auf die Patenterteilung: **07.06.2023**
(21) Anmeldenummer: 18748897.8
(22) Anmeldetag: 30.07.2018
(51) Int. Cl.: C07F 7/08, C04B 26/10, C04B 26/32, C08G 77/04, C07F 7/04, C04B 28/24, C04B 111/00, C04B 111/23, C04B 111/28

(54) **ZUSAMMENSETZUNG ENTHALTEND FURFURYLSILIKATE UND FURFURYLALKOHOL**
COMPOSITION CONTAINING FURFURYL SILICATES AND FURFURYL ALCOHOL
COMPOSITION CONTENANT UN SILICATE DE FURFURYLE ET DE L'ALCOOL FURFURYLIQUE

(30) Priorität: 31.07.2017 DE 102017117310
(43) Veröffentlichungstag der Anmeldung: 10.06.2020
(73) Patentinhaber: HÜTTENES-ALBERTUS Chemische Werke Gesellschaft mit beschränkter Haftung, 40549 Düsseldorf (DE)
(72) Erfinder: STRUNK, David, 41564 Kaarst (DE); FOURBERG, Christian, 41238 Mönchengladbach (DE); LADÉGOURDIE, Gérard, 40237 Düsseldorf (DE); BENZ, Norbert, 41239 Mönchengladbach (DE)
(74) Vertreter: Eisenführ Speiser
(86) Internationale Anmeldenummer: PCT/EP2018/070573
(87) Internationale Veröffentlichungsnummer: WO 2019/025356

(56) Entgegenhaltungen:
- WO-A1-2010/112581
- US-A- 2 276 094
- US-A- 2 300 812
- PEPPARD D F ET AL: "Transesterification Reactions of Alkyl Silicates", JOURNAL OF THE AMERICAN CHEMICAL SOCIETY, AMERICAN CHEMICAL SOCIETY, US, Bd. 68, 1. Januar 1946 (1946-01-01), Seiten 77-79, XP002288866, ISSN: 0002-7863, DOI: 10.1021/JA01205A025
- JIE ZHONG ET AL: "Synthesis of Mesoporous Carbon-Bonded TiC/SiC Composites by Direct Carbothermal Reduction of Sol-Gel Derived Monolithic Precursor", JOURNAL OF THE AMERICAN CERAMIC SOCIETY, vol. 94, no. 11, 14 June 2011 (2011-06-14) , pages 4025-4031, XP055770051, US ISSN: 0002-7820, DOI: 10.1111/j.1551-2916.2011.04662.x
- DATABASE WPI Week 197930 Thomson Scientific, London, GB; AN 1979-55905B -& SU 627 135 A (MUKHAMADALIEV N) 5 October 1978 (1978-10-05)

## Beschreibung

Die vorliegende Erfindung betrifft eine Zusammensetzung enthaltend Furfurylsilikate wie in den Ansprüchen definiert und Furfurylalkohol zur Verwendung als säurehärtbares Bindemittel, und Verfahren zur Herstellung einer derartigen Zusammensetzung. Weitere Aspekte der vorliegenden Erfindung ergeben sich aus der Beschreibung, den Ausführungsbeispielen und den Ansprüchen.

Im Kontext der vorliegenden Anmeldung bezeichnet der Begriff "Furfurylsilikate" Furfurylester der Ortho-Kieselsäure Si(OH)₄, wobei mindestens eine der vier Säurefunktionen der Ortho-Kieselsäure durch Furfurylalkohol verestert ist. Nicht durch Furfurylalkohol veresterte Säurefunktionen der Ortho-Kieselsäure sind dabei durch Alkohole aus der Gruppe der linearen und verzweigten Alkylalkohole verestert (d.h. es liegt ein gemischter Ester vor). "Furfurylsilikate" sind demnach Furfurylester der Ortho-Kieselsäure, wobei mindestens eine, oder mehrere, oder alle Säurefunktionen der Ortho-Kieselsäure durch Furfurylalkohol verestert sind.

Säurehärtbare Bindemittel sind Bindemittel, deren Härtung durch Säuren katalysiert wird. Eine technisch und wirtschaftlich bedeutende Gruppe der säurehärtbaren Bindemittel sind die Furanharze. Furanharze sind Polymere, die Furan-Ringe in der Hauptkette enthalten.

Furanharze werden durch säurekatalysierte Polykondensation von Furfurylalkohol mit sich selbst oder mit einem oder mehreren Co-Monomeren, z.B. Furfural, Formaldehyd, Harnstoff, Ketonen oder Phenolen, gebildet. Furanharze werden u.a. angewendet als Bindemittel für die Herstellung von Gießereiformen und -kernen (insbesondere im No-Bake-Verfahren und im Warm-Box-Verfahren), zur Herstellung Glasfaser-verstärkter Konstruktionsmaterialien mit hoher Korrosions-, Hitze- und Flammbeständigkeit für Behälter, Rohrleitungen und Reaktoren; als chemikalienbeständige Kitte, als bei niedriger Temperatur härtende Klebstoffe und als Bindemittel im Rapid-Prototyping Verfahren.

Bindemittel-Zusammensetzungen zur Bildung von Furanharzen enthalten üblicherweise Furfurylalkohol, ggf. eines oder mehrere der o.g. Co-Monomeren sowie niedrigmolekulare Kondensationsprodukte (Vorkondensate) der Homokondensation des Furfurylalkohols oder der Kondensation des Furfurylalkohols mit einem oder mehreren Co-Monomeren. Dabei ist es wünschenswert, den Anteil an giftigen und umweltschädigenden Bestandteilen wie Furfurylalkohol und Formaldehyd möglichst niedrig zu halten. Andererseits führt eine Verringerung des Anteils an monomerem Furfurylalkohol relativ zum Anteil der Vorkondensate zu einem Anstieg der Viskosität, so dass die Verarbeitbarkeit des Bindemittels erschwert wird. Daher besteht ein starker Bedarf für Bindemittel-Zusammensetzungen zur Bildung von Furanharzen, die bei einem relativ niedrigen Anteil an monomerem Furfurylalkohol noch gut verarbeitbar sind, und weitgehend frei sind von giftigen und umweltschädigenden Co-Monomeren wie Formaldehyd.

Es wurden auch Bindemittelzusammensetzungen beschrieben, welche Furfurylsilikate (wie oben definiert) enthalten. Allerdings weisen die bekannten Verfahren zur Herstellung der benötigten Furfurylsilikate signifikante Nachteile auf.

US 2,569,455 offenbart, dass Tetrafurfurylsilikat (Kieselsäuretetrafurfurylester) erhältlich ist durch Umsetzung von Furfurylalkohol mit Siliciumdisulfid. Nachteilig an diesem Verfahren ist die Bildung von Schwefelwasserstoff als Reaktionsprodukt, sowie die mögliche Verunreinigung des Reaktionsproduktes durch schwefelhaltige Verbindungen (nicht umgesetzte Anteile des Ausgangsproduktes und Produkte von Nebenreaktionen).

US 2,300,812 beschreibt die Herstellung von Zementzusammensetzungen, insbesondere für säurebeständige Zemente. Die Zementzusammensetzungen enthalten Furfurylorthosilikat als säurehärtbares Bindemittel. Gemäß US 2,300,812 erfolgt die Herstellung von Furfurylorthosilikat durch Umsetzung von Furfurylalkohol mit einem Alkylsilikat, dessen Alkylreste so ausgewählt sind, dass der entsprechende Alkylalkohol leichter flüchtig ist als Furfurylalkohol. Als Alkylsilikat wird z.B. Tetraethylorthosilikat eingesetzt, insbesondere in Form von Rohprodukten oder Restbrühen (tailings) der Umsetzung von Ethylalkohol mit Tetrachlorsilan. Die Umsetzung von Furfurylalkohol mit einem Alkylsilikat gemäß US 2,300,812 wird bei einer Temperatur ausgeführt, die unterhalb der Siedepunkte von Furfurylalkohol und dem betreffenden Alkylsilikat liegt, aber hoch genug ist, um den gebildeten Alkylalkohol destillativ zu entfernen. Das erhaltene Produkt wird als dunkelbraune leicht viskose Flüssigkeit (bei Einsatz von Tetraethylsilikat als Edukt) bzw. als sehr dunkel gefärbte und höher viskose Flüssigkeit (bei Einsatz des Rohprodukts der Umsetzung von Ethylalkohol mit Tetrachlorsilan als Edukt) beschrieben. Eine besondere Reinheit des Produkts ist gemäß US 2,300,812 nicht erforderlich.

US 2,300,812 enthält keine Informationen, ob die Umsetzung von Furfurylalkohol mit einem Alkylsilikat in Gegenwart eines Katalysators erfolgte. In eigenen Untersuchungen wurde jedoch festgestellt, dass in Abwesenheit von Katalysatoren die Umsetzung von Furfurylalkohol mit einem Alkylsilikat nur mit sehr geringer Geschwindigkeit verläuft. Zumindest beim Einsatz von Rohprodukten oder Restbrühen (tailings) der Umsetzung von Ethylalkohol mit Tetrachlorsilan als Edukt ist jedoch davon auszugehen, das im Reaktionssystem eine katalytisch wirksame Konzentration an Salzsäure (Beiprodukt der Umsetzung von Ethylalkohol mit Tetrachlorsilan) vorliegt. Säuren katalysieren aber gleichzeitig die Homokondensation von Furfurylalkohol, die mit hoher Geschwindigkeit verläuft und hinsichtlich der Zusammensetzung der gebildeten Produkte schwer kontrollierbar ist. Für einen hohen Anteil an Homopolymeren des Furfurylalkohols im Produkt des Prozesses gemäß US 2,300,812 spricht auch die braune oder dunkle Farbe und die relativ hohe Viskosität der erhaltenen Produkte. Bei der Homokondensation von Furfuryl-alkohol entsteht Wasser, welches wiederum die Hydrolyse des Alkylsilikats mit nachfolgender Bildung polymerer Silikate bewirkt, die ebenfalls zum Anstieg der Viskosität beitragen. In eigenen Untersuchungen wurde festgestellt, dass derartige Produkte für den Einsatz als säurehärtbare Bindemittel für die Herstellung von Gießereiformen und -kernen ungeeignet sind.

DE 28 48 319 C3 offenbart furfuryloxyendblockierte Siloxane der Formel 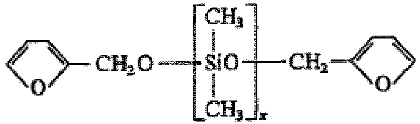 worin x einen Wert von etwa 2 bis 100 hat, vorzugsweise weniger als 25, sowie deren Herstellung und Verwendung als elektrisch isolierende Flüssigkeiten.

US 2,276,094 A offenbart ein Verfahren zur Herstellung von Polyestern, bestehend aus Monomeren von α,β-ungesättigten primären Alkoholestern der Ortho-Kieselsäure und Ortho-Borsäure.

Der Artikel "Transesterfication Reactions of Alkyl Silicates" von D. F. Peppard et al., erschienen 1946 im Journal of the American Chemical Society, beschreibt Umesterungsreaktionen von Alkylsilikaten.

WO 2010/112581 A1 offenbart ein Verfahren zur Herstellung eines Nanokompositmaterials, das aus wenigstens einer anorganischen oder metallorganischen Phase und einer organischen Polymerphase aufgebaut ist.

JIE ZHONG ET AL: "Synthesis of Mesoporous Carbon-Bonded TiC/SiC Composites by Direct Carbothermal Reduction of Sol-Gel Derived Monolithic Precursor" (J. Amer. Ceram. Soc., Bd. 94, Nr. 11, 14. Juni 2011, Seiten 4025-4031) beschreibt die Synthese kohlenstoffgebundener mesoporöser Titancarbid/Siliciumcarbid-Keramik durch carbothermische Reduktion eines monolithischen Ti-Si-O-C-Precursors, der in einem Sol-Gel-Prozess hergestellt wurde.

SU 627135 A beschreibt die Herstellung von Tetrafurfurylsilikat durch Umsetzung von Tetraethylorthosilikat mit Furfurylalkohol in Gegenwart von Natriumsilikat oder Calciumsilikat als Katalysator.

Die Aufgabe der vorliegenden Erfindung besteht somit darin, die Nachteile des Standes der Technik zu überwinden und eine Furfurylsilikate und Furfurylalkohol enthaltende Zusammensetzung bereitzustellen, welche einen hohen Anteil an Furfurylsilikaten aufweist, bei einem geringen Anteil an freiem Furfurylalkohol sowie an Homopolymeren des Furfurylalkohols und polymeren Silikaten. Insbesondere sollen die Zusammensetzungen trotz geringem Anteil an freiem Furfurylalkohol eine für den Einsatz als säurehärtbare Bindemittel, insbesondere für die Herstellung von Gießereiformen und -kernen, akzeptable Viskosität aufweisen. Eine weitere Aufgabe der vorliegenden Erfindung besteht darin, ein Verfahren zur Herstellung einer derartigen, Furfurylsilikate und Furfurylalkohol enthaltende Zusammensetzung sowie einen geeigneten Katalysator für die selektive Umsetzung von Furfurylalkohol zu Furfurylsilikaten bereitzustellen.

Diese Aufgabe wird erfindungsgemäß gelöst durch eine Zusammensetzung zur Verwendung als säurehärtbares Bindemittel umfassend
(A) eine oder mehrere Verbindungen der Formel (I)

   Si[OR¹]ₓ[OR²]_{y} (I)

   worin
   x eine ganze Zahl ist ausgewählt aus 1, 2, 3 und 4
   y eine ganze Zahl ist ausgewählt aus 0, 1, 2 und 3, wobei x + y = 4
   jede der x Struktureinheiten R¹ Furfuryl ist
   und jede der y Struktureinheiten R² unabhängig von allen anderen Struktureinheiten R² ausgewählt ist aus der Gruppe der linearen und verzweigten Alkylreste,
(B) Furfurylalkohol R¹-OH
(C) einen oder mehrere Alkylalkohole R²-OH, wobei R² jeweils ausgewählt ist aus der Gruppe der linearen und verzweigten Alkylreste
(D) eine oder mehrere Verbindungen ausgewählt ist aus der Gruppe bestehend aus Aluminium-tri-Isopropylat, Tri-n-Butylborat, Tetra-n-Butyl-Orthotitanat, Tetra-Isopropyl-Titanat, Tetrakis(2-ethylhexyl)-Titanat und Di-Butyl-Zinndilaurat
   wobei die Zusammensetzung umfasst:
   (B) einen Anteil an Furfurylalkohol im Bereich von 1 % bis 40 %,
   (C) einen Gesamtanteil an Alkylalkoholen R²-OH im Bereich von 0,5 % bis 10 %
   (D) einen Gesamtanteil an Elementen aus der Gruppe bestehend aus B, Al, Sn, Ti und Zr im Bereich von 0,01 % bis 0,5 %
   jeweils bezogen auf die Gesamtmasse der erfindungsgemäßen Zusammensetzung.

Weitere Aspekte der Erfindung betreffen ein Verfahren zur Herstellung einer erfindungsgemäßen Zusammensetzung, die Verwendung einer erfindungsgemäßen Zusammensetzung als säurehärtbares Bindemittel, ein Reaktionsgemisch umfassend eine erfindungsgemäße Zusammensetzung, einen Kit umfassend eine erfindungsgemäße Zusammensetzung, sowie ein Verfahren zur Herstellung eines Artikels ausgewählt aus der Gruppe bestehend aus Gießereikernen, Gießereiformen und Speisern.

Überraschenderweise wurde gefunden, dass Verbindungen aus der Gruppe bestehend aus Alkoholaten von Elementen aus der Gruppe bestehend aus B, Al, Sn, und Ti und Element-organischen Verbindungen von Elementen aus der Gruppe bestehend aus B, Al, Sn, und Ti (Bestandteil (D) der erfindungsgemäßen Zusammensetzung wie in den Ansprüchen definiert), wobei diese aus den in Anspruch 1 angegebenen Verbindungen dieser Gruppe ausgewählt sind, die Umsetzung von Furfurylalkohol mit Verbindungen aus der Gruppe der Alkylester der Ortho-Kieselsäure (Alkylsilikate), und der Siloxane zu Verbindungen der Formel (I) selektiv katalysieren, d.h. unerwünschte Nebenreaktionen wie die Homokondensation des Furfurylalkohols finden nur in geringem Maße statt, und es wird eine hohe Ausbeute an Verbindungen der Formel (I) erhalten.

Alkoholate von Elementen aus der Gruppe bestehend aus B, Al, Sn, und Ti im Sinne der vorliegenden Erfindung sind Verbindungen, in denen mindestens eine Alkoxygruppe über ihr Sauerstoffatom an ein Atom eines Elements aus der Gruppe bestehend aus B, Al, Sn, und Ti gebunden ist.

Element-organische Verbindungen von Elementen aus der Gruppe bestehend aus B, Al, Sn, und Ti im Sinne der vorliegenden Erfindung sind Verbindungen, in denen mindestens ein Kohlenstoffatom mit einem Atom eines Elements aus der Gruppe bestehend aus B, Al, Sn, und Ti verknüpft ist. Im Fall von Elementen aus der Gruppe bestehend aus Al, Sn, und Ti handelt es sich dabei um metall-organische Verbindungen der entsprechenden Elemente.

Ein Aspekt der vorliegenden Erfindung besteht in einer erfindungsgemäßen Zusammensetzung wie in den Ansprüchen beschrieben.

Eine erfindungsgemäße Zusammensetzung enthält (Bestandteil (A)) ein oder mehrere Furfurylsilikate, d.h. eine oder mehrere Verbindungen der Formel (I)

Si[OR¹]ₓ[OR²]_{y} (I)

worin
x eine ganze Zahl ist ausgewählt aus 1, 2, 3 und 4
y eine ganze Zahl ist ausgewählt aus 0, 1, 2 und 3,
wobei x + y = 4
jede der x Struktureinheiten R¹ Furfuryl ist
und jede der y Struktureinheiten R² unabhängig von allen anderen Struktureinheiten R² ausgewählt ist aus der Gruppe der linearen und verzweigten Alkylreste, wobei lineare Alkylreste bevorzugt sind.

Eine Verbindung der Formel (I) ist ein Ester der Ortho-Kieselsäure, in dem mindestens eine Säurefunktion der Ortho-Kieselsäure durch Furfurylalkohol verestert ist

Wenn in Formel (I) y gleich Null ist (d.h. x = 4), ist die Verbindung der Formel (I) der Tetrafurfurylester der Ortho-Kieselsäure (Tetrafurfurylsilikat), d.h. alle vier Säurefunktionen der Ortho-Kieselsäure sind durch Furfurylalkohol verestert.

Wenn in Formel (I) x und y jeweils ganze Zahlen sind ausgewählt aus 1, 2 und 3, dann ist die Verbindung der Formel (I) ein gemischter Ester der Ortho-Kieselsäure, wobei mindestens eine und höchstens drei der vier Säurefunktionen der Ortho-Kieselsäure durch Furfurylalkohol verestert sind, und die übrigen Säurefunktionen der Ortho-Kieselsäure durch Alkylalkohole R²-OH, wobei die Struktureinheit R² ausgewählt ist aus der Gruppe der linearen und verzweigten Alkylreste, wobei lineare Alkylreste bevorzugt sind.

Wenn die Verbindung der Formel (I) mehrere Struktureinheiten R² enthält (d.h. y ist eine ganze Zahl ausgewählt aus 2 und 3), dann ist jede der y Struktureinheiten R² unabhängig von allen anderen Struktureinheiten R² ausgewählt aus der Gruppe der linearen und verzweigten Alkylreste, d.h. die y Struktureinheiten R² können identisch oder verschieden sein. Bevorzugt sind alle y Struktureinheiten R² lineare Alkylreste.

Vorzugsweise besteht der Bestandteil (A) der erfindungsgemäßen Zusammensetzung aus solchen Verbindungen der Formel (I), worin
jede der y Struktureinheiten R² unabhängig von allen anderen Struktureinheiten R² ausgewählt ist aus der Gruppe bestehend aus Methyl-, Ethyl-, Propyl-, iso-Propyl-, Butyl- und iso-Butyl, wobei vorzugsweise alle Struktureinheiten R² Ethyl sind,
y eine ganze Zahl ist ausgewählt aus 1, 2 und 3.

Typischerweise liegt in der erfindungsgemäßen Zusammensetzung der Bestandteil (A) in Form einer Mischung verschiedener Verbindungen der Formel (I) vor.

Vorzugsweise ist Bestandteil (A) der erfindungsgemäßen Zusammensetzung ausgewählt aus der Gruppe bestehend aus
- der Verbindung der Formel (I) mit x = 4 und y =0,
- und solchen Verbindungen der Formel (I), worin
   y eine ganze Zahl ist ausgewählt aus 1, 2 und 3,
   jede der y Struktureinheiten R² unabhängig von allen anderen Struktureinheiten R² ausgewählt ist aus der Gruppe bestehend aus Methyl-, Ethyl-, Propyl-, iso-Propyl-, Butyl- und iso-Butyl-, wobei vorzugsweise alle Struktureinheiten R² Ethyl sind.

Besonders bevorzugt ist in der erfindungsgemäßen Zusammensetzung der Bestandteil (A) eine Mischung aus
- der Verbindung der Formel (I) mit x = 4 und y = 0,
- und einer oder mehreren Verbindungen der Formel (I), worin
   y eine ganze Zahl ist ausgewählt aus 1, 2 und 3, ,
   und jede der y Struktureinheiten R² unabhängig von allen anderen Struktureinheiten R² ausgewählt ist aus der Gruppe bestehend aus Methyl-, Ethyl-, Propyl-, iso-Propyl-, Butyl- und iso-Butyl-, wobei vorzugsweise alle Struktureinheiten R² Ethyl sind.

Ganz besonders bevorzugt ist in der erfindungsgemäßen Zusammensetzung der Bestandteil (A) eine Mischung aus Verbindungen der Formel (I)

Si[OR¹]ₓ[OR²]_{y} (I)

worin
x eine ganze Zahl ist ausgewählt aus 1, 2, 3 und 4
y in jeder Verbindung der Formel (I) unabhängig von den anderen Verbindungen der Formel (I) in der Mischung eine ganze Zahl ist ausgewählt aus 0, 1, 2 und 3
wobei x + y = 4
und jede der y Struktureinheiten R² unabhängig von allen anderen Struktureinheiten R² ausgewählt ist aus der Gruppe bestehend aus Methyl-, Ethyl-, Propyl-, iso-Propyl-, Butyl- und iso-Butyl-, wobei vorzugsweise alle Struktureinheiten R² Ethyl sind.

Eine Verbindung der Formel (I) ist ein Ester der Ortho-Kieselsäure, in dem eine oder mehrere Säurefunktionen der Ortho-Kieselsäure durch Furfurylalkohol verestert sind, und die übrigen Säurefunktionen der Ortho-Kieselsäure durch Alkylalkohole R²-OH aus der Gruppe bestehend aus Methanol, Ethanol, Propanol, iso-Propanol, Butanol und iso-Butanol verestert sind, wobei R² vorzugsweise Ethyl ist; oder alle Säurefunktionen der Ortho-Kieselsäure sind durch Furfurylalkohol verestert.

D.h. in diesem besonders bevorzugten Fall ist Bestandteil (A) eine Mischung aus dem Tetrafurfurylester der Ortho-Kieselsäure und verschiedenen gemischten Furfuryl-Alkylestern der Ortho-Kieselsäure, vorzugsweise gemischten Furfuryl-Ethyl-Estern der Ortho Kieselsäure.

Speziell bevorzugt ist in der erfindungsgemäßen Zusammensetzung der Bestandteil (A) eine Mischung aus Verbindungen der Formel (I)

Si[OR¹]ₓ[OR²]_{y} (I)

worin
x eine ganze Zahl ist ausgewählt aus 1, 2, 3 und 4
y in jeder Verbindung der Formel (I) unabhängig von den anderen Verbindungen der Formel (I) in der Mischung eine ganze Zahl ist ausgewählt aus 0, 1, 2 und 3
wobei x + y = 4
jede der x Struktureinheiten R¹ Furfuryl ist
und jede der y Struktureinheiten R² Ethyl ist.

In diesem speziell bevorzugten Fall ist Bestandteil (A) eine Mischung aus dem Tetrafurfurylester der Ortho-Kieselsäure und verschiedenen gemischten Furfuryl-Ethyl-Estern der Ortho-Kieselsäure.

Vorzugsweise ist Bestandteil (C) der erfindungsgemäßen Zusammensetzung ausgewählt aus der Gruppe bestehend aus Methanol, Ethanol, Propanol, iso-Propanol, Butanol und iso-Butanol.

### Bevorzugt ist

Bestandteil (A) der erfindungsgemäßen Zusammensetzung ausgewählt aus der Gruppe bestehend aus
- der Verbindung der Formel (I) mit x = 4 und y = 0,
- und solchen Verbindungen der Formel (I), worin
   y eine ganze Zahl ist ausgewählt aus 1, 2 und 3,
   jede der y Struktureinheiten R² unabhängig von allen anderen Struktureinheiten R² ausgewählt ist aus der Gruppe bestehend aus Methyl-, Ethyl-, Propyl-, iso-Propyl-, Butyl- und iso-Butyl-, wobei vorzugsweise alle Struktureinheiten R² Ethyl sind
   und
Bestandteil (C) der erfindungsgemäßen Zusammensetzung ausgewählt aus der Gruppe bestehend aus Methanol, Ethanol, Propanol, iso-Propanol, Butanol und iso-Butanol, wobei Bestandteil (C) vorzugsweise Ethanol ist.

Besonders bevorzugt ist in der erfindungsgemäßen Zusammensetzung
der Bestandteil (A) eine Mischung aus
   - der Verbindung der Formel (I) mit x = 4, und y = 0,
   - und einer oder mehreren Verbindungen der Formel (I), worin
      y eine ganze Zahl ist ausgewählt aus 1, 2 und 3,
      und jede der y Struktureinheiten R² unabhängig von allen anderen Struktureinheiten R² ausgewählt ist aus der Gruppe bestehend aus Methyl-, Ethyl-, Propyl-, iso-Propyl-, Butyl- und iso-Butyl-, wobei vorzugsweise alle Struktureinheiten R² Ethyl sind,
und der Bestandteil (C) ausgewählt aus der Gruppe bestehend aus Methanol, Ethanol, Propanol, iso-Propanol, Butanol und iso-Butanol, wobei Bestandteil (C) vorzugsweise Ethanol ist.

Ganz besonders bevorzugt ist in der erfindungsgemäßen Zusammensetzung der Bestandteil (A) eine Mischung aus Verbindungen der Formel (I)

Si[OR¹]ₓ[OR²]_{y} (I)

worin
x eine ganze Zahl ist ausgewählt aus 1, 2, 3 und 4
y in jeder Verbindung der Formel (I) unabhängig von den anderen Verbindungen der Formel (I) in der Mischung eine ganze Zahl ist ausgewählt aus 0, 1, 2 und 3
wobei x + y = 4
und jede der y Struktureinheiten R² unabhängig von allen anderen Struktureinheiten R² ausgewählt ist aus der Gruppe bestehend aus Methyl-, Ethyl-, Propyl-, iso-Propyl-, Butyl- und iso-Butyl-, wobei vorzugsweise alle Struktureinheiten R² Ethyl sind
und der Bestandteil (C) ausgewählt aus der Gruppe bestehend aus Methanol, Ethanol, Propanol, iso-Propanol, Butanol und iso-Butanol, vorzugsweise Ethanol.

Speziell bevorzugt ist in der erfindungsgemäßen Zusammensetzung der Bestandteil (A) eine Mischung aus Verbindungen der Formel (I)

Si[OR¹]ₓ[OR²]_{y} (I)

worin
x eine ganze Zahl ist ausgewählt aus 1, 2, 3 und 4
y in jeder Verbindung der Formel (I) unabhängig von den anderen Verbindungen der Formel (I) in der Mischung eine ganze Zahl ist ausgewählt aus 0, 1, 2 und 3
wobei x + y = 4
jede der x Struktureinheiten R¹ Furfuryl ist
und jede der y Struktureinheiten R² Ethyl ist;
und der Bestandteil (C) Ethanol.

Bestandteil (D) der erfindungsgemäßen Zusammensetzung ist ausgewählt aus der Gruppe bestehend aus Aluminium-tri-Isopropylat, Tri-n-Butylborat, Tetra-n-Butyl-Orthotitanat, Tetra-Isopropyl-Titanat, Tetrakis(2-ethylhexyl)-Titanat und Di-Butyl-Zinndilaurat. Di-Butyl-Zinndilaurat ist eine Element-organische Verbindung gemäß der oben angegebenen Definition, speziell eine metallorganische Verbindung des Zinns. Die anderen hier genannten Verbindungen sind Alkoholate gemäß der oben angegebenen Definition.

Bevorzugt umfasst eine erfindungsgemäße Zusammensetzung
(B) einen Anteil an Furfurylalkohol im Bereich von 1 % bis 24 %
(C) einen Gesamtanteil an Alkylalkoholen R²-OH im Bereich von 0,5 % bis 10 %
(D) einen Gesamtanteil an Elementen aus der Gruppe bestehend aus B, Al, Sn, Ti und Zr im Bereich von 0,01 % bis 0,5 %
jeweils bezogen auf die Gesamtmasse der erfindungsgemäßen Zusammensetzung.

Aus Gründen des Umwelt- und Gesundheitsschutzes sind erfindungsgemäße Zusammensetzungen mit einem niedrigen Anteil (vorzugsweise 24 % oder weniger, bezogen auf die Gesamtmasse der erfindungsgemäßen Zusammensetzung) an Furfurylalkohol (B) bevorzugt. Überraschenderweise wurde gefunden, dass auch bei einem Anteil von 24 % oder weniger (bezogen auf die Gesamtmasse der erfindungsgemäßen Zusammensetzung) an Furfurylalkohol (B) die Viskosität der Zusammensetzung ausreichend niedrig ist, so dass sie in der üblichen Weise verarbeitet werden kann.

Durch den geringen Anteil an Alkylalkoholen R²-OH (C) in der erfindungsgemäßen Zusammensetzung wird die Umesterung der Furfurylsilikate der Formel (I) zu Alkylestern der Ortho-Kieselsäure (Verbindungen der Formel (II) wie in den Ansprüchen beschrieben), d.h. die Rückreaktion zur erfindungsgemäßen Herstellung der Furfurylsilikate der Formel (I), weitgehend zurückgedrängt.

Die Konzentration des Bestandteils (D) kann mittels Röntgenfluoreszenzanalyse in dem Fachmann bekannter Weise ermittelt werden.

Neben den in den Ansprüchen definierten Bestandteilen (A), (B), (C) und (D) kann eine erfindungsgemäße Zusammensetzung weitere Bestandteile enthalten, z.B. Bestandteile ausgewählt aus der Gruppe bestehend aus
(E) Haftvermittlern, wobei die Haftvermittler (E) vorzugsweise ausgewählt sind aus der Gruppe der Aminosilane
   und/oder
(F) Verbindungen enthaltend einen oder mehrere Phenolringe
(G) Verbindungen aus der Gruppe bestehend aus Monoethylenglycol, Diethylenglycol, Polyethylenglycol und 1,2-Propylenglycol
(H) Tenside.

Bevorzugt sind die Haftvermittler (E) ausgewählt aus der Gruppe der Aminosilane, besonders bevorzugt aus der Gruppe bestehend aus 3-Aminopropylmethyldiethoxysilan, N-Aminoethyl-3-aminopropyltrimethoxysilan, N-Aminoethyl-3-aminopropylmethyldiethoxysilan und 3-Aminopropyltriethoxysilan.

Bestandteil (F) ist ausgewählt aus der Gruppe der Verbindungen enthaltend einen oder mehrere Phenolringe, d.h. aromatische Ringe aus 6 Kohlenstoffatomen, wobei an mindestens eines dieser Kohlenstoffatome eine Hydroxygruppe gebunden ist. Vorzugsweise ist Bestandteil (F) ausgewählt aus der Gruppe bestehend aus Bisphenol A, Cashewnussschalenöl, Komponenten von Cashewnussschalenöl, insbesondere Cardol, Cardanol sowie Derivaten und Oligomeren dieser Verbindungen wie in DE 10 2006 037288 beschrieben, Tanninen, Ligninen, natürlichen Polyphenolen, und Phenol-Formaldehyd-Harzen. Phenol-Formaldehyd-Harze sind erhältlich durch Polykondensation von Formaldehyd mit einem oder mehreren Phenolen, wobei unter Phenolen aromatische Hydroxy-Verbindungen mit einem aromatischen Ring aus 6 Kohlenstoffatomen verstanden werden, wobei an mindestens eines dieser Kohlenstoffatome eine Hydroxygruppe gebunden ist. Bevorzugt sind Polykondensate von Phenol (Hydroxybenzen) mit Formaldehyd. Die Verbindungen des Bestandteils (F) reagieren bei der Säurehärtung der erfindungsgemäßen Zusammensetzung als Co-Monomere mit Furfurylalkohol und werden in die entstehenden Furanharze eingebaut. Es hat sich gezeigt, dass dadurch die Festigkeit von Gießereiformen und -kernen erhöht wird.

In bestimmten Fällen (siehe unten) umfasst eine erfindungsgemäße Zusammensetzung auch Reaktionsprodukte von Verbindungen enthaltend einen oder mehrere Phenolringe mit Verbindungen der Formel (II) wie in den Ansprüchen definiert.

Bevorzugt beträgt in der erfindungsgemäßen Zusammensetzung
(E) der Gehalt an Haftvermittlern 0,1 % bis 2,5 %, bevorzugt 0,2 % bis 0,5 %
   und/oder
(F) der Gehalt an Verbindungen enthaltend einen oder mehrere Phenolringe 0,1 % bis 10,0 %, bevorzugt 2,0 % bis 5,0 %
   und/oder
(G) der Gehalt an Verbindungen aus der Gruppe bestehend aus Monoethylenglycol, Diethylenglycol, Polyethylenglycol und 1,2-Propylenglycol 0,1 % bis 5,0 %, bevorzugt 0,5 bis 1,0 %
   und/oder
(H) der Gehalt an Tensiden 0,1 % bis 2,0 %, bevorzugt 0,5 % bis 1,5 %
jeweils bezogen auf die Gesamtmasse der erfindungsgemäßen Zusammensetzung.

Bevorzugt ist eine erfindungsgemäße Zusammensetzung, welche
- einen Gehalt an Wasser aufweist von weniger als 0,2 %
- einen Gehalt an Formaldehyd von weniger als 0,05 %
- einen Gehalt an gebundenem Stickstoff von weniger als 0,2 %
jeweils bezogen auf die Gesamtmasse der erfindungsgemäßen Zusammensetzung.

Die Gegenwart von Wasser ist unerwünscht, da in Gegenwart von Wasser Kieselsäureester hydrolysieren, und die Hydrolyseprodukte zu polymeren Silikaten kondensieren. Dadurch würde sowohl der Anteil an freiem Furfurylalkohol als auch die Viskosität der Zusammensetzung steigen, und dies ist aus den genannten Gründen unerwünscht.

Erfindungsgemäße Zusammensetzungen zeichnen sich gegenüber herkömmlicherweise zur Bildung von Furanharzen eingesetzten Bindemittelzusammensetzungen dadurch aus, dass sie im Wesentlichen (d.h. abgesehen von unvermeidlichen Verunreinigungen) frei sind von umwelt- und gesundheitsschädlichen Co-Monomeren wie Formaldehyd, und im Wesentlichen (d.h. abgesehen von unvermeidlichen Verunreinigungen) frei von Stickstoffatome enthaltenden Co-Monomeren wie z.B. Harnstoff. Insbesondere für Bindemittel zur Herstellung von Gießereiformen und -kernen für den Eisen- und Stahlguss, vor allem für den Edelstahlguss, ist ein möglichst niedriger Gesamtgehalt an Stickstoff erwünscht, da insbesondere ein Gesamt-Stickstoffgehalt von 4 Gew.-% oder höher in einem No-Bake-Bindemittel zu Gussfehlern führen kann. Derartige Gussfehler sind z.B. sogenannte "Pinholes" (Nadelstichporen). Diese entstehen, wenn beim Gussvorgang Wasserdampf mit Eisenbegleitern und stickstoffhaltigen Komponenten zu Metalloxiden und Stickstoff-Wasserstoff-Verbindungen reagiert, die in das flüssige Metall diffundieren und zu einer Mikroporenbildung am Gussstück führen. Für bestimmte Anwendungen ist allerdings ein Zusatz geringer Mengen an stickstoffhaltigen Haftvermittlern wie Aminosilane bevorzugt.

Erfindungsgemäße Zusammensetzungen weisen eine hellbraue bis braune Farbe auf und sind durchscheinend, im Unterschied zu den nach dem Verfahren gemäß US 2,300,812 erhältlichen Furfurylsilikate enthaltenden Zusammensetzungen, welche dunkelbraun bis schwarz und kaum durchscheinend sind. Ohne Bindung an eine Theorie wird derzeit angenommen, dass die helle durchscheinende Färbung und die geringe Viskosität erfindungsgemäßer Zusammensetzungen auf einen relativ geringen Anteil an Homokondensationsprodukten des Furfurylalkohols und an polymeren Silikaten zurückzuführen ist, verglichen mit den nach dem Verfahren gemäß US 2,300,812 erhältlichen Furfurylsilikate enthaltenden Zusammensetzungen.

Bei einem Gehalt an Furfurylalkohol von 24 % bis 40 %, bezogen auf die Gesamtmasse der erfindungsgemäßen Zusammensetzung, beträgt die Viskosität bevorzugter erfindungsgemäßer Zusammensetzungen 50 mPas oder weniger, gemessen nach DIN 53019-1: 2008-09 (d.h. gemäß DIN 53019-1 vom September 2008), mit einem Rotationsviskosimeter bei 20 °C.

Bei einem Gehalt an Furfurylalkohol von 24 % oder weniger, bezogen auf die Gesamtmasse der erfindungsgemäßen Zusammensetzung, beträgt die Viskosität bevorzugter erfindungsgemäßer Zusammensetzungen 100 mPas oder weniger, gemessen nach DIN 53019-1: 2008-09 (d.h. gemäß DIN 53019-1 vom September 2008), mit einem Rotationsviskosimeter bei 20 °C.

Die o.g. bevorzugten Bereiche für die Viskosität gelten insbesondere für die Anwendung als Bindemittel im No Bake-Verfahren. Für andere Anwendungsgebiete, z.B. als Bindemittel im Warm-Box- oder Hot-Box-Verfahren, sind auch höhere Viskositäten akzeptabel.

Erfindungsgemäße Zusammensetzungen weisen bevorzugt einen Gehalt an im Wesentlichen in Furfurylsilikaten der Formel (I) gebundenem Siliciumdioxid im Bereich von 5 % bis 30 % auf, bezogen auf die Gesamtmasse erfindungsgemäßen Zusammensetzung. Die Bestimmung des Gehalts an Siliciumdioxid erfolgt anhand des bei oxidativer Veraschung einer Probe der erfindungsgemäßen Zusammensetzung bei 900°C gebildeten Glührückstands (zu Details der Ermittlung des Glührückstands sei auf die Ausführungsbeispiele verweisen). Da alle anderen Bestandteile der erfindungsgemäßen Zusammensetzung (außer dem in relativ geringer Konzentration enthaltenen Bestandteil (D)) unter diesen Bedingungen flüchtig sind bzw. gasförmige Verbrennungsprodukte bilden, besteht der Glührückstand im Wesentlichen aus Siliciumdioxid.

Bei der Säurehärtung erfindungsgemäßer Bindemittel-Zusammensetzungen werden die Furfurylsilikate zunächst zu Furfurylalkohol und Ortho-Kieselsäure aufgespalten, und bei der säurekatalysierten Polykondensation des Furfurylalkohols wird die Ortho-Kieselsäure in das entstehende Polykondensationsprodukt eingebunden. Somit wird gegenüber herkömmlichen Furanharzen, die keinen Siliciumanteil enthalten, bei gleicher Bindemittelmasse der Gehalt an Kohlenstoff reduziert. Durch den Einbau von Ortho-Kieselsäure in das entstehende Polykondensationsprodukt wird eine Erhöhung der thermischen Stabilität des Bindemittels und eine Verminderung der Geruchsbelastung durch organische Schadstoffemissionen beim Verbrennen des Bindemittels erreicht. Der letztere Vorteil ist besonders relevant für die Verwendung erfindungsgemäßer Zusammensetzungen als Bindemittel für die Herstellung von Gießereiformen und -kernen.

Erfindungsgemäße Zusammensetzungen zeichnen sich somit bei der Verwendung als Bindemittel für die Herstellung von Gießereiformen und -kernen durch geringe Schadstoff- und Geruchsemission aus, sowohl bei der Herstellung der Gießereiformen und -kerne als auch bei deren Einsatz im Gießvorgang, denn einerseits ist die erfindungsgemäße Zusammensetzung im Wesentlichen frei von umwelt- und gesundheitsschädlichen Co-Monomeren, und auch der Gehalt an Furfurylalkohol kann relativ niedrig gehalten werden, und andererseits wird durch den enthaltenen Siliciumanteil bei gleicher Bindemittelmasse der Gehalt an Kohlenstoff reduziert, so dass bei der Verbrennung des Bindemittels während des Gussvorganges eine geringere Menge an organischen Emissionen freigesetzt wird.

Ein weiterer Aspekt der vorliegenden Erfindung betrifft ein Verfahren zur Herstellung einer erfindungsgemäßen Zusammensetzung (wie in den Ansprüchen definiert). Das erfindungsgemäße Verfahren umfasst folgenden Schritt:
Umsetzen von Furfurylalkohol
mit einer oder mehreren Verbindungen der Formel (II)

   Si[OR²]ₐ[OR⁴]_{c} (II)

   worin
   a und c ganze Zahlen sind ausgewählt aus 0, 1, 2, 3 und 4, wobei eine von a und c größer ist als 0,
   wobei a + c = 4
   jede der a Struktureinheiten R² unabhängig von allen anderen Struktureinheiten R² ausgewählt ist aus der Gruppe der linearen und verzweigten Alkylreste,
   jede der c Struktureinheiten R⁴ unabhängig von allen anderen Struktureinheiten R⁴ ausgewählt ist aus der Gruppe von Struktureinheiten der Formel (III)

      -(Si[OR²]_{d}-O)ₙ-Si[OR²]f (III)

      worin
      jede der d + f Struktureinheiten R² unabhängig von allen anderen Struktureinheiten R² ausgewählt ist aus der Gruppe der linearen und verzweigten Alkylreste,
      d = 2,
      f = 3,
      n eine ganze Zahl ist im Bereich von 1 bis 10
bei einer Temperatur im Bereich von 80 °C bis 150 °C, vorzugsweise im Bereich von 100 °C bis 120 °C,
in Gegenwart einer oder mehrerer Verbindungen ausgewählt aus der Gruppe bestehend aus Aluminium-tri-Isopropylat, Tri-n-Butylborat, Tetra-n-Butyl-Orthotitanat, Tetra-Isopropyl-Titanat, Tetrakis(2-ethylhexyl)-Titanat und Di-Butyl-Zinndilaurat,
wobei eine Gesamtstoffmenge von 0,001 mol bis 0,05 mol an Verbindungen aus der Gruppe bestehend aus Alkoholaten von Elementen aus der Gruppe bestehend aus B, Al, Sn, Ti und Zr und Element-organischen Verbindungen von Elementen aus der Gruppe bestehend aus B, Al, Sn, Ti und Zr pro 1 mol in den Verbindungen der Formel (II) gebundenes Silicium eingesetzt wird.

Eine Verbindung der Formel (II) ist ein Ester der Ortho-Kieselsäure, in dem mindestens eine der vier Säurefunktionen der Ortho-Kieselsäure durch einen Alkylalkohol R²-OH verestert ist, wobei die Struktureinheit R² ausgewählt ist aus der Gruppe der linearen und verzweigten Alkylreste, wobei lineare Alkylreste bevorzugt sind.

Wenn in Formel (II) c gleich Null ist, ist die Verbindung (II) ein Tetraalkylester der Ortho-Kieselsäure, d.h. alle vier Säurefunktionen der Ortho-Kieselsäure sind durch Alkylalkohole R²-OH verestert, wobei die Struktureinheit R² ausgewählt ist aus der Gruppe der linearen und verzweigten Alkylreste, wobei lineare Alkylreste bevorzugt sind.

Wenn in Formel (II) c > 0 ist, wobei bevorzugt c =1, dann ist die Verbindung der Formel (II) ein Siloxan.

Wenn die Verbindung der Formel (II) mehrere Struktureinheiten R² enthält (d.h. a ist eine ganze Zahl ausgewählt aus 2, 3 und 4), dann ist jede der a Struktureinheiten R² unabhängig von allen anderen Struktureinheiten R² ausgewählt aus der Gruppe der linearen und verzweigten Alkylreste, d.h. die a Struktureinheiten R² können identisch oder verschieden sein. Bevorzugt sind alle a Struktureinheiten R² lineare Alkylreste.

Wenn die Verbindung der Formel (II) mehrere Struktureinheiten R⁴ enthält (d.h. c ist eine ganze Zahl ausgewählt aus 2, 3 und 4), dann ist jede der c Struktureinheiten R⁴ unabhängig von allen anderen Struktureinheiten R⁴ ausgewählt aus der Gruppe der Struktureinheiten der Formel (III), d.h. die c Struktureinheiten R² können identisch oder verschieden sein. Üblicherweise enthält die die Verbindung der Formel (II) aber höchstens eine Struktureinheit R⁴.

Jede Struktureinheit R⁴ der Formel (III) enthält n*d + f Struktureinheiten R², wobei d = 2, und f = 3.

Vorzugsweise sind die Verbindungen der Formel (II) ausgewählt aus der Gruppe bestehend aus
(i) solchen Verbindungen der Formel (II), worin
   jede der a Struktureinheiten R² unabhängig von allen anderen Struktureinheiten R² ausgewählt ist aus der Gruppe bestehend aus Methyl-, Ethyl-, Propyl-, iso-Propyl-, Butyl- und iso-Butyl-, wobei vorzugsweise alle Struktureinheiten R² Ethyl sind,
   a = 4;
      und
(ii) solchen Verbindungen der Formel (II), worin
   jede der a Struktureinheiten R² unabhängig von allen anderen Struktureinheiten R² ausgewählt ist aus der Gruppe bestehend aus Methyl-, Ethyl-, Propyl-, iso-Propyl-, Butyl- und iso-Butyl-, wobei vorzugsweise alle Struktureinheiten R² Ethyl sind,
   a = 3, c = 1,
   R⁴ ausgewählt ist aus der Gruppe bestehend aus solchen Struktureinheiten der Formel (III), worin
   R² ausgewählt ist aus der Gruppe bestehend aus Methyl-, Ethyl-, Propyl-, iso-Propyl-, Butyl- und iso-Butyl-, wobei vorzugsweise alle Struktureinheiten R² Ethyl sind,
   d = 2,
   f = 3,
   n eine ganze Zahl ist im Bereich von 1 bis 10.

Besonders bevorzugt sind im Fall (i) die Verbindungen der Formel (II) ausgewählt aus der Gruppe bestehend aussolchen Verbindungen der Formel (II), worin
a = 4 und c = 0
jede der a Struktureinheiten R² unabhängig von allen anderen Struktureinheiten R² ausgewählt ist aus der Gruppe bestehend aus Methyl-, Ethyl-, Propyl-, iso-Propyl-, Butyl- und iso-Butyl-, wobei vorzugsweise alle Struktureinheiten R² Ethyl sind.

Ganz besonders bevorzugt sind im Fall (i) Verbindungen der Formel (II')

Si[OR²]₄ (II')

worin jede der vier Struktureinheiten R² unabhängig von allen anderen Struktureinheiten R² ausgewählt ist aus der Gruppe bestehend aus Methyl-, Ethyl-, Propyl-, iso-Propyl-, Butyl- und iso-Butyl-, wobei vorzugsweise alle Struktureinheiten R² Ethyl sind.

Eine Verbindung der Formel (II') ist ein Tetraalkylester der Ortho-Kieselsäure, d.h. ein Ester der Ortho-Kieselsäure, in dem alle Säurefunktionen der Ortho-Kieselsäure durch Alkylalkohole R²-OH aus der Gruppe bestehend aus Methanol, Ethanol, Propanol, iso-Propanol, Butanol und iso-Butanol verestert sind, wobei R² vorzugsweise Ethyl ist.

Speziell bevorzugt ist im Fall (i) in Formel (II`) jede der vier Struktureinheiten R² Ethyl, d.h. die Verbindung der Formel (II) ist Tetraethylorthosilikat (TEOS).

Besonders bevorzugt sind im Fall (ii) die Verbindungen der Formel (II) ausgewählt aus der Gruppe bestehend aus solchen Verbindungen der Formel (II), worin
a = 3 und c = 1
jede der a Struktureinheiten R² unabhängig von allen anderen Struktureinheiten R² ausgewählt ist aus der Gruppe bestehend aus Methyl-, Ethyl-, Propyl-, iso-Propyl-, Butyl- und iso-Butyl-, wobei vorzugsweise alle Struktureinheiten R² Ethyl sind,
und in der Struktureinheit R⁴
n eine ganze Zahl ist im Bereich von 1 bis 10
d = 2,
f = 3 ,
jede der 2n+3 Struktureinheiten R² unabhängig von allen anderen Struktureinheiten R² ausgewählt ist aus der Gruppe bestehend aus Methyl-, Ethyl-, Propyl-, iso-Propyl-, Butyl- und iso-Butyl-, wobei vorzugsweise alle Struktureinheiten R² Ethyl sind.

Ganz besonders bevorzugt sind im Fall (ii) Verbindungen der Formel (II")

Si[OR²]₃[OR⁴] (II")

worin
jede der drei Struktureinheiten R² unabhängig von allen anderen Struktureinheiten R² ausgewählt ist aus der Gruppe bestehend aus Methyl-, Ethyl-, Propyl-, iso-Propyl-, Butyl- und iso-Butyl-, wobei vorzugsweise alle Struktureinheiten R² Ethyl sind
und die Struktureinheit R⁴ eine Struktureinheit der Formel (III') ist

   -(Si[OR²]₂-O)ₙ-Si[OR²]₃ (III')

   worin
   n eine ganze Zahl ist im Bereich von 1 bis 10
   jede der 2n+3 Struktureinheiten R² unabhängig von allen anderen Struktureinheiten R² ausgewählt ist aus der Gruppe bestehend aus Methyl-, Ethyl-, Propyl-, iso-Propyl-, Butyl- und iso-Butyl-, wobei vorzugsweise alle Struktureinheiten R² Ethyl sind.

Verbindungen der Formel (II") enthalten 2n+6 Struktureinheiten R², wobei jede der 2n+6 Struktureinheiten R² unabhängig von allen anderen Struktureinheiten R² ausgewählt ist aus der Gruppe bestehend aus Methyl-, Ethyl-, Propyl-, iso-Propyl-, Butyl- und iso-Butyl-, wobei vorzugsweise alle Struktureinheiten R² Ethyl sind.

Speziell bevorzugt ist im Fall (ii) in Formel (II") jede der 2n+6 Struktureinheiten R² Ethyl, d.h. die Verbindung der Formel (II) ist ein Ethoxysiloxan (Ethylpolysilikat). Besonders bevorzugt ist hier ein Ethoxysiloxan (Ethylpolysilikat) mit einem rechnerischen SiO₂-Gehalt von 40 % (massebezogen), zu beziehen z.B. als Dynasil^{®} 40 von der Firma Evonik.

Im erfindungsgemäßen Verfahren wird Furfurylalkohol mit einer oder mehreren Verbindungen der Formel (II) umgesetzt in Gegenwart einer oder mehrerer Verbindungen ausgewählt aus der Gruppe bestehend aus Aluminium-tri-Isopropylat, Tri-n-Butylborat, Tetra-n-Butyl-Orthotitanat, Tetra-Isopropyl-Titanat, Tetrakis(2-ethylhexyl)-Titanat und Di-Butyl-Zinndilaurat.

Bevorzugt wird bei dem erfindungsgemäßen Verfahren eine Stoffmenge von 1 mol bis 5 mol Furfurylalkohol pro 1 mol in den Verbindungen der Formel (II) gebundenes Silicium eingesetzt.

Bei dem erfindungsgemäßen Verfahren wird eine Gesamtstoffmenge von 0,001 mol bis 0,05 mol an Verbindungen aus der Gruppe bestehend aus Alkoholaten von Elementen aus der Gruppe bestehend aus B, Al, Sn, Ti und Zr und Element-organischen Verbindungen von Elementen aus der Gruppe bestehend aus B, Al, Sn, Ti und Zr pro 1 mol in den Verbindungen der Formel (II) gebundenes Silicium eingesetzt.

Besonders bevorzugt wird bei dem erfindungsgemäßen Verfahren
- eine Stoffmenge von 1 mol bis 5 mol Furfurylalkohol pro 1 mol in den Verbindungen der Formel (II) gebundenes Silicium eingesetzt.

Bei der Durchführung des erfindungsgemäßen Verfahrens ist es bevorzugt, dass beim Umsetzen von Furfurylalkohol mit einer oder mehreren Verbindungen der Formel (II) gebildete Alkylalkohole R²-OH abdestilliert werden. Durch das destillative Entfernen der gebildete Alkylalkohole R²-OH wird die Rückreaktion zur erfindungsgemäßen Herstellung der Furfurylsilikate der Formel (I), d.h. die Umesterung der gebildeten Furfurylsilikate der Formel (I) zu Verbindungen der Formel (II), weitgehend zurückgedrängt.

Besonders bevorzugt erfolgt erfindungsgemäß das Umsetzen von Furfurylalkohol mit einer oder mehreren Verbindungen der Formel (II) (wobei diese bevorzugt aus den oben als bevorzugt gekennzeichneten Verbindungen der Formel (II) ausgewählt sind) in Gegenwart einer oder mehrerer Verbindungen aus der Gruppe bestehend aus Alkoholaten von Elementen aus der Gruppe bestehend aus B, Al, Sn, und Ti und Element-organischen Verbindungen von Elementen aus der Gruppe bestehend aus B, Al, Sn, und Ti (wobei diese aus den in Anspruch 4 angegebenen Verbindungen dieser Gruppe ausgewählt sind) zunächst in einer ersten Phase bei atmosphärischem Druck bei Temperaturen bis 120 °C, bis unter diesen Bedingungen der Destillatfluss zum Erliegen kommt, und dann wird in einer anschließenden zweiten Phase der Druck auf einen Wert im Bereich von 10 kPa (100 mbar) bis 80 kPa (800 mbar) abgesenkt und die Destillation fortgesetzt.

Ein Verfahren zur Herstellung einer erfindungsgemäßen Zusammensetzung, welche neben den in den Ansprüchen definierten Bestandteilen (A), (B), (C) und (D) weitere Bestandteile enthält, umfasst vor oder nach dem Umsetzen von Furfurylalkohol mit einer oder mehreren Verbindungen der Formel (II) den folgenden Schritt:
Zugeben eines oder mehrerer weiterer Bestandteile, z.B. ausgewählt aus der Gruppe bestehend aus
(E) Haftvermittlern,
(F) Verbindungen enthaltend einen oder mehrere Phenolringe
(G) Verbindungen aus der Gruppe bestehend aus Monoethylenglycol, Diethylenglycol, Polyethylenglycol und 1,2-Propylenglycol
(H) Tenside.

Hinsichtlich bevorzugter Haftvermittler (E) bzw. bevorzugter Verbindungen (F) gelten die obenstehenden Ausführungen.

Haftvermittler (E) und Tenside (H) werden bevorzugt nach dem Umsetzen von Furfurylalkohol mit einer oder mehreren Verbindungen der Formel (II) zugegeben.

Verbindungen (F) werden vor oder nach dem Umsetzen von Furfurylalkohol mit einer oder mehreren Verbindungen der Formel (II) zugegeben. Erfolgt die Zugabe einer Verbindung (F) vor dem Umsetzen von Furfurylalkohol mit einer oder mehreren Verbindungen der Formel (II), so wird die Verbindung (F) bevorzugt in Form einer Lösung dieser Verbindung in Furfurylalkohol zugegeben. Erfolgt die Zugabe von Verbindungen (F) enthaltend einen oder mehrere Phenolringe vor dem Umsetzen von Furfurylalkohol mit einer oder mehreren Verbindungen der Formel (II), so werden bei dem erfindungsgemäßen Verfahren neben den durch Reaktion der Verbindungen der Formel (II) mit Furfurylalkohol gebildeten Verbindungen der Formel (I) auch Reaktionsprodukte von Verbindungen der Formel (II) mit Verbindungen (F) enthaltend einen oder mehrere Phenolringe gebildet.

In bestimmten Fällen umfasst ein Verfahren zur Herstellung einer erfindungsgemäßen Zusammensetzung nach dem Umsetzen von Furfurylalkohol mit einer oder mehreren Verbindungen der Formel (II) den folgenden Schritt:
Zugeben von weiterem Furfurylalkohol (B) und/oder weiterem Alkylalkohol (C), insbesondere Ethanol.

Ein weiterer Aspekt der vorliegenden Erfindung betrifft die Verwendung von Verbindungen aus der Gruppe bestehend aus Alkoholaten von Elementen aus der Gruppe bestehend aus B, Al, Sn, und Ti und Element-organischen Verbindungen von Elementen aus der Gruppe bestehend aus B, Al, Sn, und Ti , wobei diese aus den in Anspruch 1 angegebenen Verbindungen dieser Gruppe ausgewählt sind, als Katalysatoren zum Umsetzen von Furfurylalkohol mit Verbindungen der Formel (II) wie in den Ansprüchen definiert. Hinsichtlich bevorzugter Verbindungen aus dieser Gruppe gelten die obenstehenden Ausführungen.

Ein weiterer Aspekt der vorliegenden Erfindung betrifft ein Reaktionsgemisch, insbesondere zur Bildung eines säuregehärteten Bindemittels, umfassend
(i) eine erfindungsgemäße Zusammensetzung wie in den Ansprüchen beschrieben
   und
(ii) einen Aktivator umfassend
   (a) eine oder mehrere Säuren aus der Gruppe bestehend aus Sulfonsäuren und Phosphorsäure
   (b) optional eine oder mehrere Säuren aus der Gruppe der Carbonsäuren
   (c) Wasser und
   (d) optional eine oder mehrere Verbindungen aus der Gruppe bestehend aus Monoethylenglycol, Diethylenglycol, Polyethylenglycol und 1,2-Propylenglycol.

Komponente (i) des erfindungsgemäßen Reaktionsgemischs ist eine erfindungsgemäße Zusammensetzung, welche als säurehärtbares Bindemittel fungiert. Komponente (ii) des erfindungsgenmäßen Reaktionsgemischs, der Aktivator, enthält eine Säure, die die Säurehärtung des säurehärtbaren Bindemittels in Form der erfindungsgemäße Zusammensetzung bewirkt, so dass ein säuregehärtetes Bindemittel entsteht.

Komponente (i) des erfindungsgenmäßen Reaktionsgemischs ist bevorzugt ausgewählt unter den oben als bevorzugt gekennzeichneten erfindungsgemäßen Zusammensetzungen.

Bevorzugt sind in Komponente (ii) des erfindungsgemäßen Reaktionsgemischs
a) die Sulfonsäuren ausgewählt aus der Gruppe bestehend aus para-Toluensulfonsäure, Xylolsulfonsäure, Benzolsulfonsäure, Cumolsulfonsäure, Methansulfonsäure und Phenolsulfonsäure
   und/oder
b) die Carbonsäuren ausgewählt aus der Gruppe bestehend aus Benzoesäure, Milchsäure, Citronensäure, Phthalsäure, 2,4-Dihydroxybenzoesäure und Salicylsäure.

Es ist nicht ausgeschlossen, dass Komponente (ii) neben den vorgenannten Bestandteilen auch Schwefelsäure enthält.

Bevorzugt beträgt in Komponente (ii) die Konzentration an gebundenem Schwefel 12 % oder weniger, bezogen auf die Gesamtmasse der Komponente (ii). Ein geringer Schwefelanteil des Aktivators ist wegen der Verminderung umwelt- und gesundheitsschädlicher Emissionen vorteilhaft.

In einer besonders bevorzugten Ausführungsform umfasst ein erfindungsgemäßes Reaktionsgemisch zusätzlich
(iii) einen oder mehrere feuerfeste körnige Stoffe, bevorzugt in einer Menge von 80% oder mehr, bevorzugt 95% oder mehr, bezogen auf die Gesamtmasse der Komponenten (i), (ii) und (iii) des Reaktionsgemischs.

Ein solches bevorzugtes Reaktionsgemisch ist beispielsweise eine Formstoffmischung zur Herstellung eines Artikels ausgewählt aus der Gruppe bestehend aus Speisern, Gießereikernen und Gießereiformen. Komponente (iii) ist dabei der Formgrundstoff der Formstoffmischung. Geeignete Formgrundstoffe sind dem Fachmann bekannt. Als Formgrundstoff wird häufig gewaschener, klassifizierter Quarzsand verwendet, aber auch andere Formstoffe wie z.B. Zirkonsande, Chromitsande, Schamotten, Olivinsande, feldspathaltige Sande und Andalusitsande. Häufig werden regenerierte Formgrundstoffe (Altsande) eingesetzt, die durch Aufarbeitung bereits verwendeter Gießereiformen bzw. -kerne zurückgewonnen wurden. Entsprechende Verfahren sind dem Fachmann bekannt.

Überraschenderweise hat sich gezeigt, dass für die Säurehärtung erfindungsgemäßer Formstoffmischungen im Vergleich zu Formstoffmischungen mit herkömmlichen säurehärtbaren Bindemitteln geringere Mengen an Aktivator eingesetzt werden können, sowie Aktivatoren mit geringerem Säuregehalt bzw. mit weniger korrosiven Säuren (z.B. para-Toluensulfonsäure statt Schwefelsäure), ohne die Festigkeit der mit dem säuregehärteten Bindemittel gebundenen Formkörper zu beeinträchtigen. Da die in den Aktivatoren üblicherweise eingesetzten Säuren (z.B. Schwefelsäure, para-Toluensulfonsäure) Schwefel enthalten, wird durch den geringeren Säureanteil des Aktivators bzw. die geringere Aktivatormenge der Eintrag von Schwefel in die Formstoffmischung vermindert. Ein geringerer Schwefelanteil in der Formstoffmischung ist wegen der Verminderung umwelt- und gesundheitsschädlicher Emissionen vorteilhaft. Ein weiterer Vorteil besteht darin, dass durch den geringen Schwefelanteil der erfindungsgemäßen Formstoffmischung die Anreicherung von Schwefel ("Aufschwefelung") beim Regenerierungskreislauf des Alt-Formgrundstoffs (Altsands) aus benutzten Gießereiformen bzw. -kernen vermindert wird. Ein hoher Schwefelanteil im Formgrundstoff bzw. in der Formstoffmischung erhöht das Risiko an Gussfehlern wie z.B. Graphitentartung.

Ein weiterer Aspekt der vorliegenden Erfindung betrifft einen Kit, insbesondere zur Bildung eines säuregehärteten Bindemittels, umfassend
(i) eine erfindungsgemäße Zusammensetzung wie in den Ansprüchen beschrieben
(ii) einen Aktivator wie oben beschrieben
wobei in dem Kit die Komponenten (i) und (ii) so angeordnet sind, dass kein Bestandteil der Komponente (i) mit einem Bestandteil der Komponente (ii) reagieren kann.

Komponente (i) des erfindungsgemäßen Kits ist eine erfindungsgemäße Zusammensetzung, welche als säurehärtbares Bindemittel fungiert. Komponente (ii) des erfindungsgenmäßen Kits, der Aktivator, enthält eine Säure, die die Säurehärtung des säurehärtbaren Bindemittels in Form der erfindungsgemäße Zusammensetzung bewirkt, so dass ein säuregehärtetes Bindemittel entsteht.

Komponente (i) des erfindungsgenmäßen Kits ist bevorzugt ausgewählt unter den oben als bevorzugt gekennzeichneten erfindungsgemäßen Zusammensetzungen. Komponente (ii) des erfindungsgenmäßen Kits ist bevorzugt ausgewählt unter den oben als bevorzugt gekennzeichneten Aktivatoren.

Innerhalb des erfindungsgemäßen Kits ist der reaktive Kontakt von Bestandteilen der Komponente (i) mit Bestandteilen der Komponente (ii) ausgeschlossen, beispielsweise indem die Komponente (i) einerseits sowie die Komponente (ii) andererseits jeweils in einem separaten Behälter bereitgestellt sind, oder indem die Komponente (i) einerseits sowie die Komponente (ii) andererseits jeweils in einer separaten Kammer eines Behälters bereitgestellt sind.

Beim Zusammengeben der beiden Komponenten (i) und (ii) des erfindungsgemäßen Kits entsteht ein erfindungsgemäßes Reaktionsgemisch wie oben beschrieben. Bevorzugt erfolgt das Zusammengeben der beiden Komponenten (i) und (ii) in Gegenwart von
(iii) einem oder mehreren feuerfesten körnigen Stoffen, bevorzugt in einer Menge von 80% oder mehr, bevorzugt 95% oder mehr, bezogen auf die Gesamtmasse der Komponenten (i), (ii) und (iii) des Reaktionsgemischs,
so dass eine erfindungsgemäße Formstoffmischung wie oben beschrieben gebildet wird.

Komponente (i) des erfindungsgenmäßen Reaktionsgemischs ist bevorzugt ausgewählt unter den oben als bevorzugt gekennzeichneten erfindungsgemäßen Zusammensetzungen. Komponente (ii) des erfindungsgenmäßen Reaktionsgemischs ist bevorzugt ausgewählt unter den oben als bevorzugt gekennzeichneten Aktivatoren.

Ein weiterer Aspekt der vorliegenden Erfindung betrifft ein Verfahren zur Herstellung eines Artikels aus der Gruppe bestehend aus Speisern, Gießereikernen und Gießereiformen, umfassend
- Herstellen einer Formstoffmischung umfassend
   (i) eine erfindungsgemäße Zusammensetzung wie in den Ansprüchen beschrieben
   (ii) einen Aktivator wie oben beschrieben
   (iii) einen oder mehrere feuerfeste körnige Stoffe,
- Formen der Formstoffmischung
- Härten der Zusammensetzung (i) durch den Aktivator (ii).

Verfahren zum Formen von Formstoffmischungen zur Herstellung eines Artikels aus der Gruppe bestehend aus Speisern, Gießereikernen und Gießereiformen sind dem Fachmann bekannt.

Das Härten der Zusammensetzung (i) durch den Aktivator (ii) in der geformten Formstoffmischung erfolgt vorzugsweise gemäß einem Verfahren aus der Gruppe bestehend aus
- No-Bake-Verfahren
- Warmbox-Verfahren
- Hot-Box-Verfahren.

Die Härtung von Furanharzen (Furfurylalkohol enthaltenden Bindemitteln) durch das Hot-box-Verfahren, das Warmbox-Verfahren bzw. das No-Bake-Verfahren ist dem Fachmann bekannt.

Beim Warmbox-Verfahren erfolgt die Härtung des Bindemittels bei Temperaturen im Bereich von 150 °C bis 200 °C durch organische Sulfonsäuren (z. B. para-Toluensulfonsäure, Phenolsulfonsäure u.ä.) enthaltende Aktivatoren. Beim Warmbox-Verfahren lassen sich mit relativ niedrigen Temperaturen und geringen Bindemittelmengen hohe Festigkeiten erzielen.

Beim No-Bake-Verfahren erfolgt die Härtung des Bindemittels ohne Zufuhr von Wärme durch den Zusatz des organische Sulfonsäuren im Gemisch mit Schwefelsäure enthaltenden Aktivators, und verläuft relativ langsam.

Ein weiterer Aspekt der vorliegenden Erfindung betrifft die Verwendung einer erfindungsgemäßen Zusammensetzung als säurehärtbares Bindemittel
- für eine Formstoffmischung zur Herstellung eines Artikels ausgewählt aus der Gruppe bestehend aus Gießereikernen und Gießereiformen
- im 3D-Druck-Verfahren (dreidimensionales Drucken),
- für einen Kitt oder eine Dichtungsmasse zur Verwendung in der Bauindustrie, vorzugsweise im Säureschutzbau.

Die Herstellung eines Artikels ausgewählt aus der Gruppe bestehend aus Speisern, Gießereikernen und Gießereiformen unter Verwendung der erfindungsgemäßen Zusammensetzung als säurehärtbares Bindemittel erfolgt nach dem erfindungsgemäßen Verfahren wie oben beschrieben.

Beim 3D-Druckverfahren wird aus einer erfindungsgemäßen Formstoffmischung (wie oben beschrieben) durch dreidimensionales Drucken ein Formkörper aufgebaut. Entsprechende Technologien sind dem Fachmann bekannt.

Kitte bzw. Dichtungsmassen zur Verwendung im Säureschutzbau (auch als Säurekitte bezeichnet) dienen zum Verlegen und Verfugen Silicat-keramischer und Kohlenstoff-keramischer Steine, Platten und Formteile, die als Schutzbeläge auf Böden, in Rinnen, Kanälen, Behältern usw. diese gegen den Angriff von Säuren (mit Ausnahme von Flusssäure) schützen. Säurekitte enthalten ein Kittmehl sowie ein Bindemittel und einen Aktivator um die Härtung des Bindemittels zu bewirken. Bei Verwendung der erfindungsgemäßen Zusammensetzung als Bindemittel für einen Säurekitt erfolgt dessen Härtung durch einen eine Säure enthaltenden Aktivator

Die Erfindung wird nachstehend anhand von Beispielen näher erläutert.

### Beispiele

### 1. Herstellung erfindungsgemäßer Zusammensetzungen durch Umsetzung von Furfurylalkohol mit einer Verbindung der Formel (II)

### 1.1 Tetraethylorthosilikat als Verbindung der Formel (II)

### Produkt P1

In ein mit Rückflusskühler, Thermometer und Rührer ausgestattetes Reaktionsgefäß werden 150 g Furfurylalkohol (FA), 100 g Tetraethylorthosilikat (TEOS) und 2 g Tetrabutyltitanat vorgelegt. Zu Reaktionsbeginn beträgt das Stoffmengenverhältnis n(FA) : n(in TEOS gebundenes Si) 3,2 : 1,0. Unter Rühren wird das Gemisch in 8 Minuten auf 109 °C erwärmt, wo es zu sieden beginnt. Die Temperatur wird in 45 Minuten kontinuierlich auf 120°C angehoben und insgesamt 48 ml flüchtige Bestandteile abdestilliert. Anschließend wird die Heizung entfernt und der Druck vorsichtig auf 700 mbar gesenkt. Die Temperatur fällt hierbei kurzeitig auf ca. 97 °C ab. Nun wird der Druck weiter gesenkt bis auf ca. 400 mbar, und gleichzeitig wird die Temperatur innerhalb von 25 Minuten auf 120 °C kontinuierlich angehoben, um weitere flüchtige Bestandteile abzudestillieren (ca. 32 ml). Das erhaltene Produkt weist eine bräunliche Farbe auf und ist klar und durchscheinend. Die Ausbeute an nichtflüchtigem Produkt (nach dem Abdestillieren der flüchtigen Bestandteile) beträgt ca. 70% bezogen auf die Gesamtmasse an vorgelegtem Furfurylalkohol, Tetraethylorthosilikat und Tetrabutyltitanat.

### Produkt P2

In ein mit Rückflusskühler, Thermometer und Rührer ausgestattetes Reaktionsgefäß werden 150 g Furfurylalkohol (FA), 100 g Tetraethylorthosilikat (TEOS) und 3 g Tetrabutyltitanat vorgelegt. Zu Reaktionsbeginn betrug das Stoffmengenverhältnis n(FA) : n(in TEOS gebundenes Si) 3,2 : 1,0. Unter Rühren wird das Gemisch in 2 Minuten auf 37 °C erwärmt und der Druck auf 400 mbar gesenkt, um flüchtige Bestandteile abzudestillieren. Nun wird der Druck weiter gesenkt bis ca. 350 mbar und gleichzeitig die Temperatur in 45 Minuten auf 110 °C kontinuierlich angehoben, um weitere flüchtige Bestandteile abzudestillieren (ca. 76 ml). Das erhaltene Produkt weist eine bräunliche Farbe auf und ist klar und durchscheinend. Die Ausbeute an nichtflüchtigem Produkt (nach dem Abdestillieren der flüchtigen Bestandteile) beträgt ca. 76%, bezogen auf die Gesamtmasse an vorgelegtem Furfurylalkohol, Tetraethylorthosilikat und Tetrabutyltitanat.

### Produkt P3

In ein mit Rückflusskühler, Thermometer und Rührer ausgestattetes Reaktionsgefäß werden 800 g Furfurylalkohol (FA), 800 g Tetraethylorthosilikat (TEOS) und 4 g Tetrabutyltitanat vorgelegt. Zu Reaktionsbeginn betrug das Stoffmengenverhältnis n(FA) : n(in TEOS gebundenes Si) 2,1 : 1,0. Unter Rühren wird das Gemisch in 20 Minuten auf 100 °C und in weiteren 80 Minuten kontinuierlich auf 120 °C erwärmt. 246 g flüchtige Bestandteile werden hierbei abdestilliert. Anschließend wird die Heizung entfernt und der Druck vorsichtig auf 210 mbar gesenkt. Die Temperatur fällt hierbei auf ca. 85 °C ab. Nun wird der Druck bei 210 mbar konstant gehalten und gleichzeitig die Temperatur in 60 Minuten auf 120 °C kontinuierlich angehoben, um weitere flüchtige Bestandteile abzudestillieren. Das erhaltene Produkt weist eine bräunliche Farbe auf und ist klar und durchscheinend. Die Ausbeute an nichtflüchtigem Produkt (nach dem Abdestillieren der flüchtigen Bestandteile) beträgt ca. 76 % bezogen auf die Gesamtmasse an vorgelegtem Furfurylalkohol, Tetraethylorthosilikat und Tetrabutyltitanat.

### 1.2 Ethylpolysilicat als Verbindung der Formel (II)

### Produkt P4

In ein mit Rückflusskühler, Thermometer und Rührer ausgestattetes Reaktionsgefäß werden 800 g Furfurylalkohol (FA), 800 g Ethylpolysilikat (EPS) mit einem rechnerischen SiOz-Gehalt von 40% (zu beziehen als Dynasil^{®} 40 von der Firma Evonik) und 4 g Tetrabutyltitanat vorgelegt. Zu Reaktionsbeginn beträgt das Stoffmengenverhältnis n(FA) : n(in EPS gebundenes Si) 1,53 : 1,0. Unter Rühren wird das Gemisch in 15 Minuten auf 103 °C erwärmt, wo es zu sieden beginnt. Die Temperatur wird in 50 Minuten kontinuierlich auf 120 °C angehoben und insgesamt 236 g flüchtige Bestandteile werden abdestilliert. Anschließend wird die Heizung entfernt und der Druck vorsichtig auf 210 mbar gesenkt. Die Temperatur fällt hierbei auf ca. 85 °C ab. Nun wird der Druck bei 210 mbar konstant gehalten und gleichzeitig die Temperatur in 50 Minuten auf 120 °C kontinuierlich angehoben, um weitere flüchtige Bestandteile abzudestillieren. Das erhaltene Produkt weist eine bräunliche Farbe auf und ist klar und durchscheinend. Die Ausbeute an nichtflüchtigem Produkt (nach dem Abdestillieren der flüchtigen Bestandteile) beträgt ca. 77 % bezogen auf die Gesamtmasse an vorgelegtem Furfurylalkohol, Ethylpolysilikat und Tetrabutyltitanat.

### Produkt P5

In ein mit Rückflusskühler, Thermometer und Rührer ausgestattetes Reaktionsgefäß werden 150 g einer Lösung eines Phenol-Formaldehyd-Novolaks (Bestandteil (F) wie oben definiert) 30%ig in Furfurylalkohol, 150 g Ethylpolysilikat (EPS) mit einem rechnerischen SiO₂-Gehalt von 40% (zu beziehen als Dynasil^{®} 40 von der Firma Evonik) und 3 g Dibutylzinnlaurat (DBTL) vorgelegt. Zu Reaktionsbeginn beträgt das Stoffmengenverhältnis n(FA) : n(in EPS gebundenes Si) 1,53 : 1,0. Unter Rühren wird das Gemisch in 15 Minuten auf 127° C, in weiteren 45 Minuten kontinuierlich auf 140 °C erwärmt und die Temperatur anschließend bei 140 °C konstant gehalten. 60 ml flüchtige Bestandteile werden hierbei abdestilliert. Das erhaltene Produkt weist eine rötlich-braune Farbe auf und ist klar und durchscheinend, Die Ausbeute an nichtflüchtigem Produkt (nach dem Abdestillieren der flüchtigen Bestandteile) beträgt ca. 83 % bezogen auf die Gesamtmasse an vorgelegtem Phenol-Formaldehyd-Novolak, Furfurylalkohol, Ethylpolysilikat und Dibutylzinnlaurat.

### 1.3 Zusatz weiterer Bestandteile

### Produkt P6

96,1 Teile des wie oben beschrieben hergestellten Produktes P1 wurden mit 3,5 Teilen Ethanol und 0,4 Teilen eines als Haftvermittler (Bestandteil (E) wie oben definiert) geeigneten Aminosilans (zu beziehen als Dynasylan 1505 von der Firma Evonik) vermischt.

### Produkt P7

73,7 Teile des wie oben beschrieben hergestellten Produktes P1 wurden mit 22,4 Teilen einer Lösung von Bisphenol A (Bestandteil (F) wie oben definiert) in Furfurylalkohol (wobei die Lösung 4,48 Teile Bisphenol A enthält), 3,5 Teilen Ethanol sowie 0,4 Teilen eines als Haftvermittler (Bestandteil (E) wie oben definiert) geeigneten Aminosilans (zu beziehen als Dynasylan 1505 von der Firma Evonik) vermischt.

### Produkt P8

96,1 Teile des wie oben beschrieben hergestellten Produktes P2 wurden mit 3,5 Teilen Ethanol sowie 0,4 Teilen eines als Haftvermittler (Bestandteil (E) wie oben definiert) geeigneten Aminosilans (zu beziehen als Dynasylan 1505 von der Firma Evonik) vermischt.

### Produkte P9 bis P14

Weitere erfindungsgemäße Produkte P9 bis P14 wurden durch Zugeben der in Tabelle 1 angegebenen Mengen weiterer Bestandteile zu der in Tabelle 1 angegebenen Menge des wie oben beschrieben hergestellten Produktes P1 hergestellt.

**Tabelle 1**

| | P9 | P10 | P11 | P12 | P13 | P14 |
|---|---|---|---|---|---|---|
| Furfurylalkohol | | 8,80 | 9,30 | 9,30 | 9,30 | 9,30 |
| Produkt P1 | 99,50 | 87,20 | 84,40 | 83,40 | 83,40 | 83,40 |
| Bisphenol A | | | 2,30 | 2,30 | 2,30 | 2,30 |
| Ethanol | | 3,50 | 3,50 | 3,50 | 3,50 | 3,50 |
| Aminosilan | 0,50 | 0,50 | 0,50 | 0,50 | 0,50 | 0,50 |
| Tensid 1 | | | | 1,00 | | |
| Tensid 2 | | | | | 1,00 | |
| Tensid 3 | | | | | | 1,00 |

### 2. Nicht erfindungsgemäße Vergleichsprodukte

### Vergleichsprodukt V1

Das zu Vergleichszwecken untersuchte, nicht erfindungsgemäße Vergleichsprodukt V1 hat bezogen auf seine Gesamtmasse die folgende Zusammensetzung (Tabelle 2):

**Tabelle 2**

| | |
|---|---|
| Kaltharz A (Zusammensetzung siehe unten) | 56,0 Gew.-% |
| monomeres Furfurylalkohol | 41,3 Gew.-% |
| Wasser | 2,5 Gew.-% |
| Aminosilan | 0,2 Gew.-% |

Das Vergleichsprodukt V1 wurde hergestellt, indem die in Tabelle 2 genannten Bestandteile unter Rühren in einen Reaktor eingebracht und 15 Minuten lang gemischt wurden.

Zur Herstellung des Kaltharzes A werden in einem Reaktor 489,9 kg Furfurylalkohol, 63,0 kg Harnstoff, 158,8 kg Paraformaldehyd 91 %ig, 35,6 kg Wasser und 49,5 kg Ethanol vorgelegt und intensiv vermischt. Anschließend werden 4,8 kg Ameisensäure 85%ig zugegeben und die resultierende Mischung auf 90 °C aufgeheizt. In zeitlichen Abständen von jeweils etwa 30 Minuten werden weitere 62,9 kg Harnstoff bei 90 °C portionsweise zugegeben. Anschließend wird diese Reaktionsmischung etwas abgekühlt und es werden 113,1 kg Furfurylalkohol zugegeben. Nach weiterem Abkühlen auf 50 °C wird zuletzt ein pH-Wert im Bereich von 8,1 bis 8,8 eingestellt mittels Zugabe von Ammoniak 25%ig in Wasser. Während des gesamten Verfahrens wird der Reaktorinhalt gerührt. Das so erhaltene Produkt wird hier als Kaltharz A bezeichnet. Das Kaltharz A weist folgende chemische und physikalische Parameter auf (Tabelle 3):

**Tabelle 3**

| | |
|---|---|
| Wassergehalt | 13,5 Gew.-%, |
| (bestimmt durch Karl-Fischer-Titration) | |
| Gesamtgehalt an Stickstoff | 6,2 Gew.-%, |
| (bestimmt durch Elementaranalyse) | |
| Gehalt an Formaldehyd | 0,1 Gew.-%, |
| (bestimmt durch Titration nach dem KCN-Verfahren) | |
| Viskosität bei 20 °C | 95 mPa*s |
| (bestimmt mittels Rotationsviskosimeter) | |

### Vergleichsprodukt V2

Das zu Vergleichszwecken untersuchte, nicht erfindungsgemäße Vergleichsprodukt V2 hat bezogen auf seine Gesamtmasse die folgende Zusammensetzung (Tabelle 4):

**Tabelle 4**

| | | |
|---|---|---|
| 1 | Furfurylalkohol | 82,38 Gew.-% |
| 2 | Bisphenol A | 13,0 Gew.-% |
| 3 | Resorcin | 3,0 Gew.-% |
| 4 | Formaldehydlösung 49%ig in Wasser | 1,0 Gew.-% |
| 5 | Tensid | 0,12 Gew.-% |
| 6 | Aminosilan | 0,5 Gew.-% |

Das Vergleichsprodukt V2 wurde hergestellt, indem die Bestandteile 1-4 unter Rühren in einen Reaktor eingebracht und 30 Minuten lang gemischt wurden. Im Anschluss werden die Bestandteile 5 und 6 hinzugefügt, und die erhaltene Mischung für weitere 15 Minuten gemischt.

### 3. Chemische Charakterisierung

Daten zur chemischen Zusammensetzung der erfindungsgemäßen Produkte P1 bis P5 sowie der Vergleichsprodukte V1 und V2 sind in Tabelle 5 zusammengestellt.

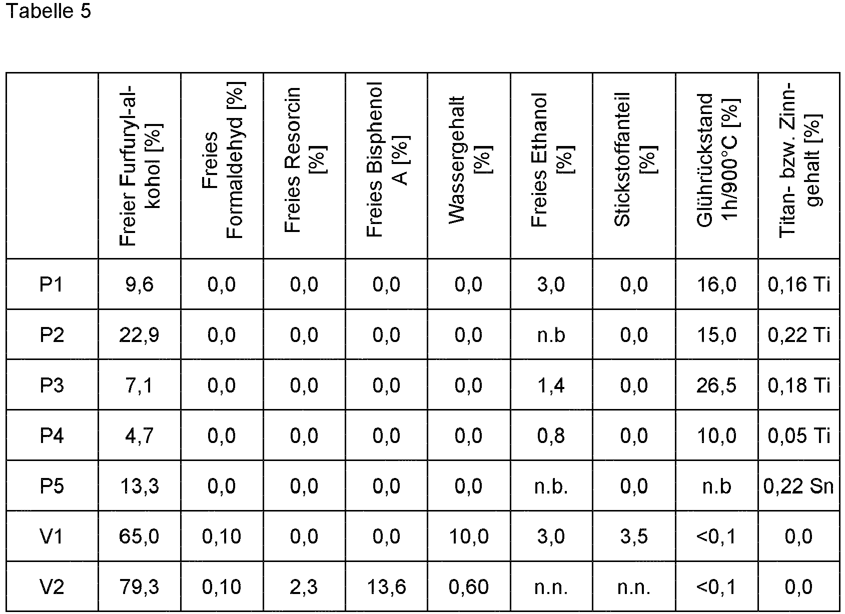

In Tabelle 5 beziehen sich bei den erfindungsgemäßen Produkten P1 bis P5 die Konzentrationsangaben zu freiem Furfurylalkohol (Bestandteil (B)) und Ethanol (Bestandteil (C)) auf die Gesamtmasse des wie oben in Punkt 1.1 bzw. 1.2 beschrieben nach dem Abdestillieren der flüchtigen Bestandteile erhaltenen nichtflüchtigem Produkts.

Der Gehalt an Titan bzw. Zinn in den Produkten P1 bis P5 wurde berechnet basierend auf der eingesetzten Menge an Tetrabutyltitanat bzw. Dibutylzinnlaurat unter der zumindest näherungsweise zutreffenden Annahme, dass beim Abdestillieren der flüchtigen Bestandteile nahezu kein Tetrabutyltitanat bzw. Dibutylzinnlaurat aus dem Reaktionssystem entfernt wird.

In den Vergleichsprodukten V1 und V2 beziehen sich alle Konzentrationsangaben in Tabelle 5 auf die Gesamtmasse des wie oben in Punkt 2 beschrieben durch Mischen der in Tabelle 2 bzw. Tabelle 4 aufgelisteten Bestandteile hergestellten Vergleichsprodukts V1 bzw. V2.

In Tabelle 5 bedeutet "0,0", dass der betreffende Bestandteil nicht vorhanden war, "n.n" bedeutet "nicht nachweisbar" und "n.b" bedeutet "nicht bestimmt", d.h. es erfolgte keine Analyse bezüglich des betreffenden Bestandteils.

Die Konzentrationen von Furfurylalkohol, Resorcin, Bisphenol A und Ethanol wurden mittels Gaschromatographie bestimmt, der Wassergehalt mittels Karl-Fischer-Titration, der Gehalt an freiem Formaldehyd mittels Titration nach dem KCN-Verfahren. Der Stickstoffanteil wurde mittels Elementaranalyse bestimmt.

Die erfindungsgemäßen Zusammensetzungen (Produkte P1 bis P5) zeichnen sich gegenüber herkömmlichen säurehärtbaren Bindemitteln (Vergleichsprodukte V1 und V2) durch einen wesentlich geringeren Gehalt an freiem Furfurylalkohol aus, und sie enthalten weder Stickstoff noch freies Formaldehyd.

Von den erfindungsgemäßen Produkten P1 bis P4 sowie den Vergleichsprodukten V1 und V2 wurde der Glührückstand bestimmt. Dazu wird eine Probe mittels eines Brenners oxidativ vorverascht und anschließend in einem Porzellantiegel bis zur Massekonstanz, mindestens jedoch 1 Stunde, bei 900 °C geglüht. Da die beim Glühen flüchtigen Inhaltsstoffe meist organischer Natur sind, ist der Glührückstand ein Maß für den Gehalt an solchen Bestandteilen, die bei der Veraschung nichtflüchtige anorganische Verbindungen bilden. Bei den erfindungsgemäßen Zusammensetzungen enthält der Glührückstand im wesentlichen bei der thermischen Zersetzung von Verbindungen der Formel (I) gebildetes Siliciumdioxid.

Die erfindungsgemäßen Produkte P1 bis P4 bilden somit einen Glührückstand, der mengenmäßig näherungsweise dem Anteil an gebundenem Siliciumdioxid in den enthaltenen Verbindungen der Formel (I) entspricht. Die Bildung einer relativ hohen Menge an Glührückstand bei den erfindungsgemäßen Produkten P1 bis P3 (hergestellt mit Tetraethylorthosilikat als Verbindung der Formel (II), siehe oben) ist ein Indiz dafür, dass in diesen Produkten durch Umsetzen von Furfurylalkohol mit Tetraethylorthosilikat (Verbindung der Formel (II)) gebildete Reaktionsprodukte (Verbindungen der Formel (I)) vorliegen. Es handelt sich also nicht um bloße Mischungen von Furfurylalkohol und Tetraethylorthosilikat, denn Tetraethylorthosilkat entweicht unter den Bedingungen der Bestimmung des Glührückstands nahezu rückstandsfrei.

Die Vergleichsprodukte V1 bzw. V2 bildeten einen sehr geringen Glührückstand, da sie im wesentlichen aus organischen Bestandteilen bestehen.

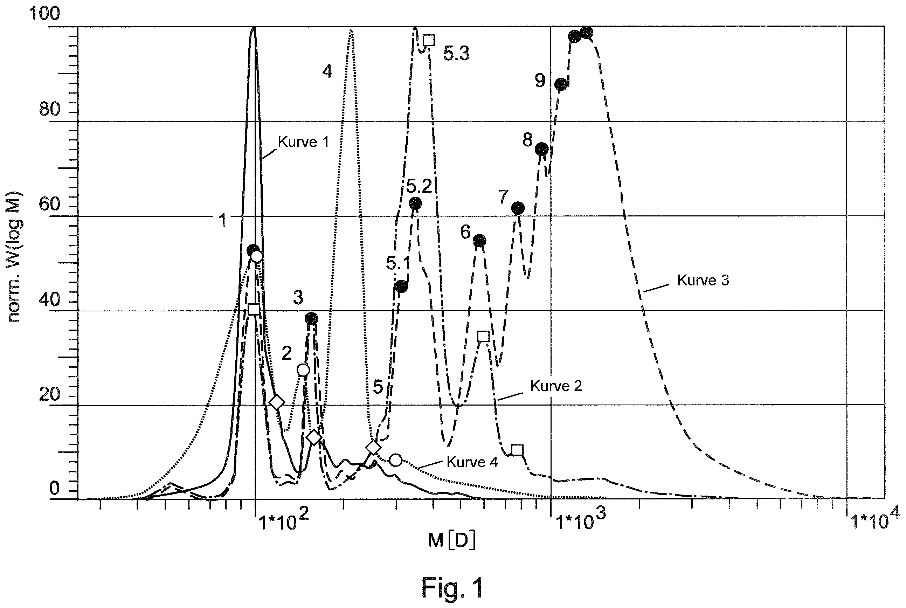

Zur weiteren Aufklärung der Struktur der durch Umsetzen von Furfurylalkohol mit Tetraethylorthosilikat gebildeten Reaktionsprodukte wurden die erfindungsgemäßen Produkte P1 und P3 mittels Gelpermeationschromatographie (GPC) analysiert. Parallel dazu wurden auch die nicht erfindungsgemäßen Vergleichsprodukte V1 und V2 mittels GPC analysiert. Die Chromatogramme aller untersuchten Produkte sind in Figur 1 dargestellt. Darin entsprechen:
Kurve 1: GPC des Vergleichsprodukts V1
Kurve 2: GPC des erfindungsgemäßen Produktes P1
Kurve 3: GPC des erfindungsgemäßen Produktes P3
Kurve 4: GPC des Vergleichsprodukts V2

In Tabelle 6 sind einige signifikante Peaks der Chromatogramme sowie ihre Zuordnung zu bestimmten Bestandteilen der untersuchten Produkte aufgelistet.

**Tabelle 6**

| Peak Nr. | Peak enthalten in Kurve | Mp (Molmasse in g/mol an der Peakspitze) | Zugeordnete Struktur; vermutete Struktureinheit mit (*) gekennzeichnet |
|---|---|---|---|
| 1 | 1-4 | 99,3 | Furfurylalkohol (Molmasse 98.1 g/mol) |
| 2 | 4 | 145 | Resorcin (Molmasse 1110,111 g/mol) |
| 3 | 1-4 | 155,3 | |
| 4 | 4 | 214,8 | Bisphenol A (Molmasse 228,286 g/mol) |
| 5 | 2, 3 (Schulter) | 268,0 | 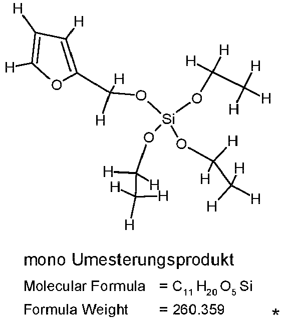 |
| 5.1 | 23 | 313,3 - 313,8 | 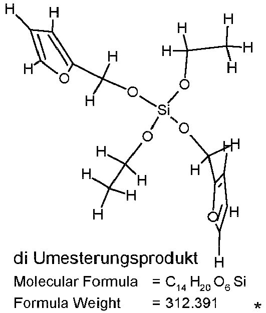 |
| 5.2 | 2,3 | 347,7 - 351,0 | 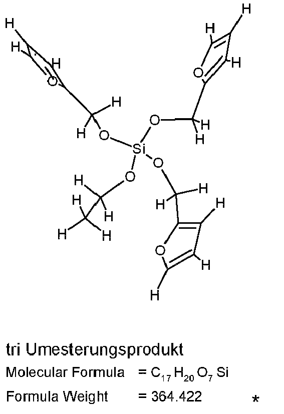 |
| 5.3 | 2,3 | 384,4 - 388,4 | 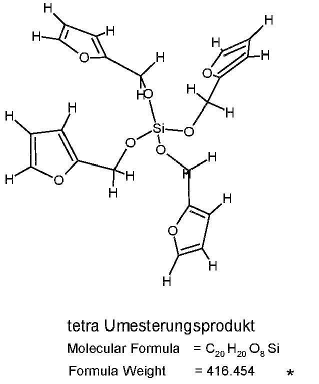 |
| 6 | 2,3 | 588 - 598 | |
| 7 | 2,3 | 776 | |
| 8 | 3 | 945 | |
| 9 | 3 | 1100 | |
| | keine | | Tetraethylorthosilikat |
| | | | 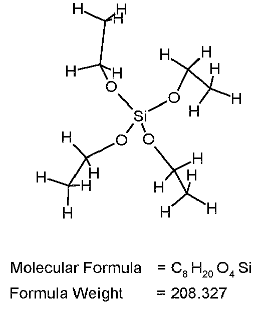 |

Alle GPC-Kurven enthalten einen dem monomeren Furfurylalkohol zuzuordnenden Peak, denn alle untersuchten Produkte enthalten monomeren Furfurylalkohol. Kurve 4 weist dem Resorcin bzw. Bisphenol A zuordenbare GPC-Peaks auf, da Vergleichsprodukt V2 diese Bestandteile enthält. Ausschließlich die Kurven 2 und 3 (erfindungsgemäße Produkte P1 und P3) weisen Peaks auf, die sich den gemischten Furfuryl-/Ethyl-Estern (mit 1, 2 bzw. 3 Furfurylresten) der Ortho-Kieselsäure bzw. dem Furfuryltetrasilikat (Verbindungen der Formel (I)) zuordnen lassen. Ein dem Tetraethylorthosilikat (Molmasse 208,327 g/mol) zuordenbarer Peak ist in Kurve 2 nicht erkennbar, obwohl Produkt P1 durch Umsetzen von Tetraethylorthosilikat mit Furfurylalkohol hergestellt wurde. Dies ist ein weiteres Indiz dafür, dass Furfurylalkohol mit Tetraethylorthosilikat (Verbindung der Formel (II)) zu Verbindungen der Formel (I) umgesetzt worden ist.

### 4. Physikalische Charakterisierung

Einige physikalische Parameter der erfindungsgemäßen Produkte P1-P5 sowie der Vergleichsprodukte V1 und V2 sind in Tabelle 7 zusammengestellt.

**Tabelle 7**

| | Dichte @20°C [g/cm³] | Brechungsindex n^{D}₂₀ | Viskosität @20°C (Rotationsexperiment) [mPa*s] | Oberflächenspannung nach Wilhelmy @25°C [mN/m] |
|---|---|---|---|---|
| P1 | 1,182 | 1,487 | 11 | 35,4 |
| P3 | 1,231 | 1,479 | 42 | n.b. |
| P4 | 1,133 | 1,465 | 9 | n.b. |
| P5 | n.b | n.b | 940 | n.b. |
| V1 | 1,160 | 1,485 | 20 | n.b. |
| V2 | 1,137 | 1,501 | 12 | 40,5 |

In Tabelle 7 bedeutet "n.b." "nicht bestimmt", d.h. es erfolgte keine Messung des betreffenden Parameters.

Die erfindungsgemäßen Produkte P1, P3 und P4 weisen trotz ihres wesentlich geringeren Anteils an monomerem Furfurylalkohol eine in derselben Größenordnung liegende Viskosität auf wie die Vergleichsprodukte V1 und V2 und sind daher für den Einsatz als Bindemittel im No-Bake Verfahren geeignet. Das Produkt P5 ist für den Einsatz als Bindemittel im Warmbox- oder Hotbox-Verfahren geeignet.

Hinsichtlich der anderen Parameter unterscheiden sich die erfindungsgemäßen Produkte nicht signifikant von den Vergleichsprodukten.

### 5. Anwendung als säurehärtbares Bindemittel im No-Bake-Verfahren

Aus Formstoffmischungen umfassend Quarzsand H32 (zu beziehen von der Firma Quarzwerke GmbH, D-50207 Frechen) als Formgrundstoff, das Vergleichsprodukt V1 bzw. eines der erfindungsgemäßen Produkte P6 bis P8 als säurehärtbares Bindemittel und den Aktivator S1 bzw. S2 wurden Prüfkörper in Form von Biegeriegeln hergestellt. Die zur Härtung verwendeten Aktivatoren S1 bzw. S2 hatten die in Tabelle 8 angegebene Zusammensetzung (bezogen auf je 100 Gewichtsteile Aktivator).

**Tabelle 8**

| Aktivator | para-Toluensulfon-säure | Schwefelsäure | Mono-Ethylenglycol | Wasser |
|---|---|---|---|---|
| S1 | 65,0 | 1,0 | 0 | 34,0 |
| S2 | 48,2 | 0,8 | 23,0 | 28,0 |

Die Zusammensetzungen der einzelnen Formstoffmischungen sind Tabelle 9 zu entnehmen. Die Härtung erfolgte im No-Bake-Verfahren. Es wurden die Verarbeitungseigenschaften der Formstoffmischungen sowie die Biegefestigkeit der erhaltenen Prüfkörper zu verschiedenen Zeitpunkten nach der Aushärtung ermittelt (anwendungstechnische Untersuchung). Die Ergebnisse der anwendungstechnischen Untersuchung sind in Tabelle 9 zusammengestellt. Darin entsprechen die GT-Angaben den Gewichteilen von Sand, Bindemittel und Aktivator in der jeweiligen Formstoffmischung.

Die Bestimmung der Verarbeitbarkeitsdauer erfolgte gemäß dem Merkblatt P 72 "Bindemittelprüfung Prüfung von kalthärtenden, kunstharzgebundenen feuchten Formstoffen mit Härterzusatz" des VDG (Verein Deutscher Gießereifachleute) mit einem Prüfstab aus säurebeständigem Stahl mit einem Durchmesser von ca. 6 mm und einem Gewicht von 12 g, der an einem Ende konisch verjüngt ist und an der Konusspitze eine Halbkugel mit 2 mm Durchmesser trägt. Die Prüfung wird am Prüfkörper jeweils in Abständen von 30 s solange wiederholt, bis die vorsichtig auf den Prüfkörper aufgesetzte Spitze des Prüfstiftes keinen tieferen Eindruck im Kern mehr hinterlässt, als ihrem Radius entspricht (ca. 1 mm). Die Zeitspanne (in min) zwischen der Harzzugabe und dem Zeitpunkt, an dem die vorsichtig auf den Prüfkörper aufgesetzte Spitze des Prüfstiftes keinen tieferen Eindruck im Kern mehr hinterlässt, als ihrem Radius entspricht, ist die Verarbeitbarkeitsdauer der Prüfmischung. Die Bestimmung der Aushärtezeit erfolgt analog zur Bestimmung der Verarbeitbarkeitsdauer, wobei der Prüfstab mit einem Zusatzgewicht von 100 g beschwert ist.

**Tabelle 9**

| ANWENDUNGSTECHNISCHE UNTERSUCHUNG | | | | | Raumtemperatur: 21 °C | | | relative Luftfeuchtigkeit : 45% | |
|---|---|---|---|---|---|---|---|---|---|
| | | | | | Sandtemperatur: 21 °C | | | | |
| Versuch Nr. | Bindemittel GT je 100 GT Sand H 32 | Aktivator GT je 100 GT Sand H 32 | Verarbeitbarkeitsdauer in Minuten | Aushärtezeit in Minuten | Biegefestigkeiten in N/cm² zu verschiedenen Zeitpunkten nach Aushärtung | | | | |
| | | | | | 1 Stunde | 2 Stunden | 4 Stunden | | 24 Stunden |
| 1 | V1 | S1 | 13 | 19 | 195 | 390 | 435 | | 475 |
| | 1,00 | 0,50 | | | | | | | |
| 2 | V1 | S1 | 35 | 45 | 65 | 190 | 215 | | 305 |
| | 1,00 | 0,25 | | | | | | | |
| 3 | V1 | S2 | 42 | 58 | 0 | 30 | 180 | | 365 |
| | 1,00 | 0,50 | | | | | | | |
| 4 | V1 | S2 | 55 | 70 | 0 | 10 | 50 | | 250 |
| | 1,00 | 0,25 | | | | | | | |
| 5 | P6 | S2 | 6 | 8 | 110 | 170 | 200 | | 260 |
| | 1,00 | 0,25 | | | | | | | |
| 6 | P7 | S2 | 7 | 11 | 160 | 210 | 255 | | 315 |
| | 1,00 | 0,25 | | | | | | | |
| 7 | P7 | S1 1:1 in Ethanol | 12 | 18 | 95 | 175 | 215 | | 260 |
| | 1,00 | 0,25 (incl. Ethanol) | | | | | | | |
| 8 | P8 | S2 | 8 | 12 | 95 | 220 | 235 | | 255 |
| | 1,00 | 0,25 | | | | | | | |

Die Formstoffmischungen mit den erfindungsgemäßen Produkten P6 bis P8 als Bindemittel haben bei gleicher Aktivatormenge und -zusammensetzung deutlich kürzere Aushärtezeiten als die mit dem Vergleichsprodukt V1 als Bindemittel (Vergleich der Versuche 4, 5, 6 und 8). Die hohe Reaktivität der erfindungsgemäßen Bindemittel-Zusammen-setzungen ermöglicht es, in den erfindungsgemäßen Formstoffmischungen die Menge des eingesetzten Aktivators zu vermindern und Aktivatoren mit geringerem Säuregehalt bzw. mit weniger korrosiven Säuren (z.B. p-Toluensulfonsäure statt Schwefelsäure) einzusetzen, und dennoch Prüfkörper mit akzeptabler Festigkeit zu erhalten. Falls erforderlich, lässt sich die Verarbeitbarkeitsdauer der Formstoffmischung durch Verdünnung des Aktivators verlängern (siehe Versuch 7).

Aus Formstoffmischungen umfassend Quarzsand H32 (zu beziehen von der Firma Quarzwerke GmbH, D-50207 Frechen) als Formgrundstoff mit dem Vergleichsprodukt V1 bzw. dem erfindungsgemäßen Produkt P7 als Bindemittel und den Aktivatoren S1 bzw. S2 hergestellte Prüfkörper (Biegeriegel) wurden nach anwendungstechnischer Untersuchung bei 900 °C pyrolysiert. Die Pyrolysegase wurden hinsichtlich der Konzentration (in mg/kg Formstoffmischung) bestimmter emissionsrelevanter Leitkomponenten untersucht. Die Zusammensetzungen der entsprechenden Formstoffmischungen, die Ergebnisse der anwendungstechnischen Untersuchung der Prüfkörper und die Konzentrationen bestimmter emissionsrelevanter Leitkomponenten im bei der Pyrolyse des Prüfkörpers entstehenden Pyrolysegas sind in Tabelle 10 aufgelistet.

In Formstoffmischungen mit dem erfindungsgemäßen Produkt P7 als Bindemittel wird durch den darin enthaltenen Siliciumanteil bei gleicher Bindemittelmasse wie in der Formstoffmischung mit dem Vergleichsprodukt V1 als Bindemittel der durch das Bindemittel eingebrachte Gehalt an Kohlenstoff reduziert, so dass bei der Verbrennung des Bindemittels eine geringere Menge an organischen Emissionen freigesetzt wird.

Die Emissionen an Benzol und Toluol vermindern sich deutlich, wenn anstelle des Aktivators S1 der einen geringeren Gehalt an para-Toluensolfonsäure aufweisende Aktivator S2 eingesetzt wird. Mit dem Aktivator S2 werden aber nur aus Formstoffmischungen mit dem erfindungsgemäßen Bindemittel Prüfkörper mit akzeptablen Festigkeiten erhalten. Somit lässt sich bei Einsatz des erfindungsgemäßen Bindemittels durch die Möglichkeit, ohne Einbußen bei der Biegefestigkeit der Formkörper Aktivatoren mit einem geringeren Gehalt an para-Toluensolfonsäure zu verwenden, eine Verminderung der Emissionen an Benzol und Toluol erreichen.

**Tabelle 10**

| Zusammensetzung der Formstoffmischung | | | | | |
|---|---|---|---|---|---|
| Bindemittel | | V1 | V1 | P7 | P7 |
| GT je 100 GT Sand H 32 | | 1 | 1 | 1 | 1 |
| Aktivator | | S1 | S2 | S1 | S2 |
| GT je 100 GT Sand H 32 | | 0,5 | 0,5 | 0,5 | 0,5 |

| Anwendungstechnische Untersuchung | | | | | |
|---|---|---|---|---|---|
| Raumtemperatur | °C | 22,5 | 22,6 | 22,7 | 22,7 |
| Sandtemperatur | °C | 21,3 | 21,3 | 21,3 | 21,3 |
| relative Luftfeuchtigkeit | % | 26 | 26 | 26 | 51 |
| Verarbeitbarkeitsdauer | min | 15 | 68 | 3 | 7 |
| Aushärtezeit 100g | min | 23 | 115 | 4 | 13 |
| Biegefestigkeit nach 1 h | N/cm² | 110 | 0 | 170 | 90 |
| Biegefestigkeit nach 2 h | N/cm² | 230 | 0 | 230 | 200 |
| Biegefestigkeit nach 4 h | N/cm² | 260 | 40 | 250 | 250 |
| Biegefestigkeit nach 24 h | N/cm² | 220 | 210 | 220 | 265 |

| Emissionen bei Pyrolyse | | | | | |
|---|---|---|---|---|---|
| Benzol | mg/kg | 204,5 | 76,5 | 177,5 | 85 |
| Toluol | mg/kg | 11 | 1,5 | 6 | 1,5 |
| o/m/p-Xylol | mg/kg | 1 | 2 | 1 | 1 |
| Mesityloxid | mg/kg | 2,9 | 1,9 | 0,3 | 0,6 |
| Styren | mg/kg | 3,5 | 3,85 | 1,95 | 1,65 |
| Isophoron | mg/kg | 6,85 | 5 | 2,65 | 1,95 |
| N-Methylanilin | mg/kg | 2,95 | 0,65 | 0,2 | 0,2 |
| Naphthalin | mg/kg | 20,35 | 19,75 | 11,45 | 8,95 |
| p-Toluidine | mg/kg | 0 | 0,8 | 0 | 0 |
| o-Kresol | mg/kg | 2,3 | 2,25 | 1,5 | 0,4 |
| Phenol | mg/kg | 0,25 | 0,55 | 0,25 | 0,6 |
| m-Kresol | mg/kg | 0 | 0 | 0,3 | 0 |
| 3,5-Dimethylphenol | mg/kg | 1,6 | 0,85 | 0 | 0 |
| 3-Methyl-1H-Indanol | mg/kg | 0 | 0 | 0 | 0 |

### 6. Weitere anwendungstechnische Untersuchungen

Weitere anwendungstechnische Untersuchungen dienen dazu, grundlegende Erkenntnisse hinsichtlich der Eignung von Formstoffmischungen mit dem erfindungsgemäßen Bindemittel für die Formkörperherstellung mittels 3D-Druck (wie z.B. beim Rapid-Prototyping eingesetzt) zu gewinnen. Im Gegensatz zu den unter Punkt 5 beschriebenen anwendungstechnischen Untersuchungen wurde hier ein Formgrundstoff mit einer wesentlich feineren Körnung (Sand GS 14) eingesetzt, wie für den 3D-Druck erforderlich. Außerdem enthielten einige der untersuchten Formstoffmischungen erfindungsgemäße Bindemittel mit Zusatz von Tensiden (Bestandteil (H)). Den Bindemitteln für mittels 3D-Druck zu verarbeitende Formstoffmischungen werden üblicherweise Tenside zugesetzt, um eine geeignete Oberflächenspannung einzustellen.

Aus Formstoffmischungen umfassend jeweils 100 Gewichtsteile Sand GS 14 (zu beziehen von der Firma Strobel Quarzsand GmbH Freihung) als Formgrundstoff, 1 Gewichtsteil eines Bindemittels ausgewählt aus der Gruppe bestehend aus den Vergleichsprodukten V1 und V2 und den erfindungsgemäßen Produkten P9 bis P14 und 0,3 Gewichtsteilen eines Aktivators aus der Gruppe der Aktivatoren S1 bis S4 wurden Prüfkörper in Form von Biegeriegeln hergestellt. Die zur Härtung verwendeten Aktivatoren S1 bis S4 hatten die in Tabelle 11 angegebene Zusammensetzung (bezogen auf je 100 Gewichtsteile Aktivator).

**Tabelle 11**

| Aktivator | para-Toluensulfonsäure | Schwefelsäure | Mono-Ethylenglycol | Wasser |
|---|---|---|---|---|
| S1 | 65,0 | 1,0 | 0 | 34,0 |
| S2 | 48,2 | 0,8 | 23,0 | 28,0 |
| S3 | 63,0 | 3,0 | 0 | 34,0 |
| S4 | 57,9 | 0,9 | 7,0 | 34,2 |

Die Zusammensetzungen der einzelnen Formstoffmischungen sind Tabelle 12 zu entnehmen. Die Härtung erfolgte im No-Bake-Verfahren. Es wurden die Verarbeitungseigenschaften der Formstoffmischungen sowie die Biegefestigkeit der erhaltenen Prüfkörper zu verschiedenen Zeitpunkten nach der Aushärtung ermittelt (anwendungstechnische Untersuchung). Die Ergebnisse der anwendungstechnischen Untersuchung sind in Tabelle 12 zusammengestellt. Darin entsprechen die GT-Angaben den Gewichteilen von Sand, Bindemittel und Aktivator in der jeweiligen Formstoffmischung.

**Tabelle 12**

| ANWENDUNGSTECHNISCHE UNTERSUCHUNG | | | | | Raumtemperatur: 21 °C | | | relative Luftfeuchtigkeit: 43% | |
|---|---|---|---|---|---|---|---|---|---|
| | | | | | Sandtemperatur: 21 °C | | | | |
| Nr. | Bindemittel | Aktivator | Verarbeitungszeit in Minuten | Aushärtezeit in Minuten | Biegefestigkeiten in N/cm² zu verschiedenen Zeitpunkten nach der Aushärtung | | | | |
| | | | | | 1 Stunde | 2 Stunden | 4 Stunden | | 24 Stunden |
| 1 | P9 | S2 | 7 | 11 | 70 | 160 | 170 | | 180 |
| 2 | P10 | S2 | 8 | 12 | 60 | 155 | 180 | | 180 |
| 3 | P11 | S2 | 8 | 12 | 90 | 185 | 205 | | 195 |
| 4 | P12 | S2 | 8 | 13 | 75 | 140 | 205 | | 190 |
| 5 | P13 | S2 | 9 | 13 | 90 | 150 | 180 | | 185 |
| 6 | P14 | S2 | 9 | 13 | 70 | 165 | 185 | | 175 |
| 7 | P9 | S4 | 6 | 10 | 70 | 85 | 100 | | 100 |
| 8 | P10 | S4 | 5 | 9 | 160 | 170 | 196 | | 195 |
| 9 | P11 | S4 | 6 | 10 | 110 | 165 | 170 | | 180 |
| 10 | P12 | S4 | 6 | 9 | 140 | 165 | 180 | | 190 |
| 11 | P13 | S4 | 7 | 11 | 130 | 205 | 205 | | 190 |
| 12 | P14 | S4 | 7 | 10 | 130 | 185 | 190 | | 160 |
| 13 | V1 | S1 | 7 | 10 | 135 | 190 | 150 | | 185 |
| 14 | V2 | S3 | 7 | 10 | 165 | 220 | 200 | | 210 |

Die Verarbeitungs- und Aushärtungszeiten der meisten Formstoffmischungen 1-12 mit erfindungsgemäßen Bindemitteln sind relativ kurz aufgrund der hohen Reaktivität der erfindungsgemäßen Bindemittel, obwohl der Säuregehalt der eingesetzten Aktivatoren in den Formstoffmischungen 1-12 geringer ist als der Säuregehalt in den Formstoffmischungen 13 und 14 mit den nicht erfindungsgemäßen Bindemitteln.

## Patentansprüche

1. Zusammensetzung zur Verwendung als säurehärtbares Bindemittel umfassend
(A) eine oder mehrere Verbindungen der Formel (I)
Si[OR¹]ₓ[OR²]_{y} (I)
worin
x eine ganze Zahl ist ausgewählt aus 1, 2, 3 und 4
y eine ganze Zahl ist ausgewählt aus 0, 1, 2 und 3
wobei x + y = 4
jede der x Struktureinheiten R¹ Furfuryl ist
und jede der y Struktureinheiten R² unabhängig von allen anderen Struktureinheiten R² ausgewählt ist aus der Gruppe der linearen und verzweigten Alkylreste
(B) Furfurylalkohol R¹-OH
(C) einen oder mehrere Alkylalkohole R²-OH, wobei R² jeweils ausgewählt ist aus der Gruppe der linearen und verzweigten Alkylreste
(D) eine oder mehrere Verbindungen ausgewählt aus der Gruppe bestehend aus Aluminium-tri-Isopropylat, Tri-n-Butylborat, Tetra-n-Butyl-Orthotitanat, Tetra-Isopropyl-Titanat, Tetrakis(2-ethylhexyl)-Titanat und Di-Butyl-Zinndilaurat,
wobei die Zusammensetzung umfasst:
(B) einen Anteil an Furfurylalkohol im Bereich von 1 % bis 40 %,
(C) einen Gesamtanteil an Alkylalkoholen R²-OH im Bereich von 0,5 % bis 10 %
(D) einen Gesamtanteil an Elementen aus der Gruppe bestehend aus B, Al, Sn, Ti und Zr im Bereich von 0,01 % bis 0,5 %
jeweils bezogen auf die Gesamtmasse der erfindungsgemäßen Zusammensetzung.

2. Zusammensetzung nach Anspruch 1, umfassend
(B) einen Anteil an Furfurylalkohol im Bereich von 1 % bis 24 %
(C) einen Gesamtanteil an Alkylalkoholen R²-OH im Bereich von 0,5 % bis 10 %
(D) einen Gesamtanteil an Elementen aus der Gruppe bestehend aus B, Al, Sn, Ti und Zr im Bereich von 0,01 % bis 0,5 %
jeweils bezogen auf die Gesamtmasse der Zusammensetzung.

3. Zusammensetzung nach Anspruch 1 oder 2, worin Bestandteil
(A) ausgewählt ist aus solchen Verbindungen der Formel (I), worin
jede der y Struktureinheiten R² unabhängig von allen anderen Struktureinheiten R² ausgewählt ist aus der Gruppe bestehend aus Methyl-, Ethyl-, Propyl-, iso-Propyl-, Butyl- und iso-Butyl-, wobei vorzugsweise alle Struktureinheiten R² Ethyl sind,
y eine ganze Zahl ist ausgewählt aus 1, 2 und 3,
und/oder
(C) ausgewählt ist aus der Gruppe bestehend aus Methanol, Ethanol, Propanol, iso-Propanol, Butanol und iso-Butanol
und/oder
(D) ausgewählt ist aus der Gruppe bestehend aus Tetra-n-Butyl-Orthotitanat, Tetra-Isopropyl-Titanat, Tetrakis(2-ethylhexyl)-Titanat und Di-Butyl-Zinndilaurat.

4. Verfahren zur Herstellung einer Zusammensetzung gemäß einem der Ansprüche 1 bis 3, wobei das Verfahren folgenden Schritt umfasst:
Umsetzen von Furfurylalkohol
mit einer oder mehreren Verbindungen der Formel (II)
Si[OR²]ₐ[OR⁴]_{c} (II)
worin
a und c ganze Zahlen sind ausgewählt aus 0, 1, 2, 3 und 4, wobei eine von a und c größer ist als 0,
wobei a + c = 4
jede der a Struktureinheiten R² unabhängig von allen anderen Struktureinheiten R² ausgewählt ist aus der Gruppe der linearen und verzweigten Alkylreste,
jede der c Struktureinheiten R⁴ unabhängig von allen anderen Struktureinheiten R⁴ ausgewählt ist aus der Gruppe von Struktureinheiten der Formel
-(Si[OR²]_{d}-O)ₙ-Si[OR²]_{f} (III)
worin
jede der d+f Struktureinheiten R² unabhängig von allen anderen Struktureinheiten R² ausgewählt ist aus der Gruppe der linearen und verzweigten Alkylreste,
d = 2,
f= 3,
n ist eine ganze Zahl im Bereich von 1 bis 10
bei einer Temperatur im Bereich von 80 °C bis 150 °C, vorzugsweise im Bereich von 100 °C bis 120 °C,
in Gegenwart einer oder mehrerer Verbindungen ausgewählt aus der Gruppe bestehend aus Aluminium-tri-Isopropylat, Tri-n-Butylborat, Tetra-n-Butyl-Orthotitanat, Tetra-Isopropyl-Titanat, Tetrakis(2-ethylhexyl)-Titanat und Di-Butyl-Zinndilaurat,
wobei eine Gesamtstoffmenge von 0,001 mol bis 0,05 mol an Verbindungen aus der Gruppe bestehend aus Alkoholaten von Elementen aus der Gruppe bestehend aus B, Al, Sn, Ti und Zr und Element-organischen Verbindungen von Elementen aus der Gruppe bestehend aus B, Al, Sn, Ti und Zr pro 1 mol in den Verbindungen der Formel (II) gebundenes Silicium eingesetzt wird.

5. Verfahren nach Anspruch 4, wobei
die Verbindung der Formel (II) ausgewählt ist aus der Gruppe bestehend aus solchen Verbindungen der Formel (II), worin
(i) R² ausgewählt ist aus der Gruppe bestehend aus Methyl-, Ethyl-, Propyl-, iso-Propyl-, Butyl- und iso-Butyl-, wobei vorzugsweise alle Struktureinheiten R² Ethyl sind,
c = 0, a = 4;
(ii) R² ausgewählt ist aus der Gruppe bestehend aus Methyl-, Ethyl-, Propyl-, iso-Propyl-, Butyl- und iso-Butyl-, wobei vorzugsweise alle Struktureinheiten R² Ethyl sind,
a = 3, c = 1,
R⁴ ausgewählt ist aus der Gruppe bestehend aus solchen Struktureinheiten der Formel (III), worin
R² ausgewählt ist aus der Gruppe bestehend aus Methyl-, Ethyl-, Propyl-, iso-Propyl-, Butyl- und iso-Butyl-, wobei vorzugsweise alle Struktureinheiten R² Ethyl sind,
d = 2, f = 3,
n eine ganze Zahl ist im Bereich von 1 bis 10.

6. Verfahren nach einem der Ansprüche 4 oder 5, wobei
eine Stoffmenge von 1 mol bis 5 mol, vorzugsweise 1,53 mol bis 5 mol, besonders bevorzugt 2,1 mol bis 5 mol Furfurylalkohol pro 1 mol in den Verbindungen der Formel (II) gebundenes Silicium eingesetzt wird.

7. Verwendung einer Zusammensetzung nach einem der Ansprüche 1 bis 3 als säurehärtbares Bindemittel
- für eine Formstoffmischung zur Herstellung eines Artikels ausgewählt aus der Gruppe bestehend aus Gießereikernen, Gießereiformen und Speisern,
- im 3D-Druckverfahren,
- für einen Kitt oder eine Dichtungsmasse zur Verwendung in der Bauindustrie, vorzugsweise im Säureschutzbau.

8. Reaktionsgemisch, insbesondere zur Bildung eines säuregehärteten Bindemittels, umfassend
(i) eine Zusammensetzung nach einem der Ansprüche 1 bis 3
(ii) einen Aktivator umfassend
a) eine oder mehrere Säuren aus der Gruppe bestehend aus Sulfonsäuren und Phosphorsäure
b) optional eine oder mehrere Säuren aus der Gruppe der Carbonsäuren
c) Wasser
d) und optional eine oder mehrere Verbindungen aus der Gruppe bestehend aus Monoethylenglycol, Diethylenglycol, Poyethylenglycol und 1,2-Propylenglycol.

9. Reaktionsgemisch nach Anspruch 8, zusätzlich umfassend
(iii) einen oder mehrere feuerfeste körnige Stoffe, bevorzugt in einer Menge von 80 % oder mehr, bevorzugt 95 % oder mehr, bezogen auf die Gesamtmasse des Reaktionsgemisches.

10. Verfahren zur Herstellung eines Artikels ausgewählt aus der Gruppe bestehend aus Gießereikernen, Gießereiformen und Speisern, umfassend
- Herstellen einer Formstoffmischung umfassend
(i) eine Zusammensetzung nach einem der Ansprüche 1 bis 3,
(ii) einen Aktivator wie in Anspruch 8 definiert,
(iii) einen oder mehrere feuerfeste körnige Stoffe,
- Formen der Formstoffmischung
- Härten der Zusammensetzung (i) durch den Aktivator (ii).

## Claims

1. Composition for use as acid-curable binder, comprising
(A) one or more compounds of the formula (I)
Si[OR¹]ₓ[OR²]_{y} (I)
in which
x is an integer selected from 1, 2, 3 and 4
y is an integer selected from 0, 1, 2 and 3
where x + y = 4
each of the x structural units R¹ is furfuryl
and each of the y structural units R², independently of all other structural units R², is selected from the group of linear and branched alkyl radicals
(B) furfuryl alcohol R¹-OH
(C) one or more alkyl alcohols R²-OH, where R² in each case is selected from the group of linear and branched alkyl radicals
(D) one or more compounds selected from the group consisting of aluminium triisopropoxide, tri-n-butyl borate, tetra-n-butyl orthotitanate, tetraisopropyl titanate, tetrakis(2-ethylhexyl) titanate and dibutyltin dilaurate,
where the composition comprises:
(B) a fraction of furfuryl alcohol in the range from 1% to 40%,
(C) a total fraction of alkyl alcohols R²-OH in the range from 0.5% to 10%
(D) a total fraction of elements from the group consisting of B, Al, Sn, Ti and Zr in the range from 0.01% to 0.5%
based in each case on the total mass of the composition of the invention.

2. Composition according to Claim 1, comprising
(B) a fraction of furfuryl alcohol in the range from 1% to 24%
(C) a total fraction of alkyl alcohols R²-OH in the range from 0.5% to 10%
(D) a total fraction of elements from the group consisting of B, Al, Sn, Ti and Zr in the range from 0.01% to 0.5%
based in each case on the total mass of the composition.

3. Composition according to Claim 1 or 2, in which constituent
(A) is selected from those compounds of the formula (I) in which
each of the y structural units R², independently of all other structural units R², is selected from the group consisting of methyl, ethyl, propyl, isopropyl, butyl and isobutyl, where preferably all structural units R² are ethyl,
y is an integer selected from 1, 2 and 3,
and/or
(C) is selected from the group consisting of methanol, ethanol, propanol, isopropanol, butanol and isobutanol
and/or
(D) is selected from the group consisting of tetra-n-butyl orthotitanate, tetraisopropyl titanate, tetrakis(2-ethylhexyl) titanate and dibutyltin dilaurate.

4. Process for preparing a composition according to any of Claims 1 to 3, where the process comprises the following step:
reaction of furfuryl alcohol
with one or more compounds of the formula (II)
Si[OR²]ₐ[OR⁴]_{c} (II)
in which
a and c are integers selected from 0, 1, 2, 3 and 4, where one of a and c is greater than 0,
where a + c = 4
each of the a structural units R², independently of all other structural units R², is selected from the group of linear and branched alkyl radicals,
each of the c structural units R⁴, independently of all other structural units R⁴, is selected from the group of structural units of the formula
-(Si[OR²]_{d}-O)ₙ-Si[OR²]_{f} (III)
in which
each of the d+f structural units R², independently of all other structural units R², is selected from the group of linear and branched alkyl radicals,
d = 2,
f = 3,
n is an integer in the range from 1 to 10
at a temperature in the range from 80°C to 150°C, preferably in the range from 100°C to 120°C,
in the presence of one or more compounds selected from the group consisting of aluminium triisopropoxide, tri-n-butyl borate, tetra-n-butyl orthotitanate, tetraisopropyl titanate, tetrakis(2-ethylhexyl) titanate and dibutyltin dilaurate,
where a total amount of substance of 0.001 mol to 0.05 mol of compounds from the group consisting of alkoxides of elements from the group consisting of B, Al, Sn, Ti and Zr and organoelement compounds of elements from the group consisting of B, Al, Sn, Ti and Zr per mole of silicon bonded in the compounds of the formula (II) is used.

5. Process according to Claim 4, where
the compound of the formula (II) is selected from the group consisting of those compounds of the formula (II) in which
(i) R² is selected from the group consisting of methyl, ethyl, propyl, isopropyl, butyl and isobutyl, where preferably all structural units R² are ethyl,
c = 0, a = 4;
(ii) R² is selected from the group consisting of methyl, ethyl, propyl, isopropyl, butyl and isobutyl, where preferably all structural units R² are ethyl,
a = 3, c = 1,
R⁴ is selected from the group consisting of those structural units of the formula (III) in which
R² is selected from the group consisting of methyl, ethyl, propyl, isopropyl, butyl and isobutyl, where preferably all structural units R² are ethyl,
d = 2, f = 3,
n is an integer in the range from 1 to 10.

6. Process according to either of Claims 4 and 5, where
an amount of substance of 1 mol to 5 mol, preferably 1.53 mol to 5 mol, more preferably 2.1 mol to 5 mol of furfuryl alcohol per mole of silicon bonded in the compounds of the formula (II) is used.

7. Use of a composition according to any of Claims 1 to 3 as acid-curable binder
- for a moulding mixture for producing an article selected from the group consisting of foundry cores, foundry moulds and feeders,
- in the 3D printing process,
- for a putty or a sealant for use in the construction industry, preferably in acid-protection construction.

8. Reaction mixture, especially for forming an acidcured binder, comprising
(i) a composition according to any of Claims 1 to 3
(ii) an activator comprising
a) one or more acids from the group consisting of sulfonic acids and phosphoric acid
b) optionally one or more acids from the group of carboxylic acids
c) water
d) and optionally one or more compounds from the group consisting of monoethylene glycol, diethylene glycol, polyethylene glycol and 1,2-propylene glycol.

9. Reaction mixture according to Claim 8, further comprising
(iii) one or more refractory granular substances, preferably in an amount of 80% or more, preferably 95% or more, based on the total mass of the reaction mixture.

10. Process for producing an article selected from the group consisting of foundry cores, foundry moulds and feeders, comprising
- producing a moulding mixture comprising
(i) a composition according to any of Claims 1 to 3,
(ii) an activator as defined in Claim 8,
(iii) one or more refractory granular substances,
- moulding the moulding mixture
- curing the composition (i) by the activator (ii).

## Revendications

1. Composition destinée à être utilisée en tant que liant durcissant par un acide, comprenant
(A) un ou plusieurs composés de la formule (I)
Si[OR¹]ₓ[OR²]_{y} (I)
dans laquelle
x est un nombre entier choisi parmi 1, 2, 3 et 4
y est un nombre entier choisi parmi 0, 1, 2 et 3
dans lequel x + y = 4
chacun des x motifs structuraux R¹ est du furfuryle
et chacun des y motifs structuraux R² est choisi indépendamment de tous les autres motifs structuraux R² parmi le groupe des radicaux alkyle linéaires et ramifiés
(B) de l'alcool furfurylique R²-OH
(C) un ou plusieurs alcools alkyliques R²-OH, dans lequel R² est choisi respectivement parmi le groupe des radicaux alkyle linéaires et ramifiés
(D) un ou plusieurs composés choisis parmi le groupe constitué de tri-isopropylate d'aluminium, de tri-n-butylborate, de tetra-n-butyle-orthotitanate, de tetra-isopropyle-titanate, de tetrakis(2-éthylhexyl)-titanate et de dilaurate d'étain di-butyle,
dans lequel la composition comprend :
(B) une proportion en alcool furfurylique dans la plage de 1 % à 40 %,
(C) une proportion totale en alcools alkyliques R²-OH dans la plage de 0,5 % à 10 %
(D) une proportion totale en éléments issus du groupe constitué de B, Al, Sn, Ti et Zr dans la plage de 0,01 % à 0,5 %,
rapportée respectivement au poids total de la composition selon l'invention.

2. Composition selon la revendication 1, comprenant
(B) une proportion en alcool furfurylique dans la plage de 1 % à 24 %
(C) une proportion totale en alcools alkyliques R²-OH dans la plage de 0,5 % à 10 %
(D) une proportion totale en éléments issus du groupe constitué de B, Al, Sn, Ti et Zr dans la plage de 0,01 % à 0,5 %
rapportée respectivement au poids total de la composition.

3. Composition selon la revendication 1 ou 2, dans laquelle le constituant
(A) est choisi parmi des composés de ce type de la formule (I), dans laquelle
chacun des y motifs structuraux R² est choisi indépendamment de tous les autres motifs structuraux R² parmi le groupe constitué des groupes méthyle, éthyle, propyle, iso-propyle, butyle et iso-butyle, dans lequel de préférence tous les motifs structuraux R² sont de l'éthyle,
y est un nombre entier choisi parmi 1, 2 et 3,
et/ou
(C) est choisi parmi le groupe constitué de méthanol, d'éthanol, de propanol, d'iso-propanol, de butanol et d'iso-butanol
et/ou
(D) est choisi parmi le groupe constitué de tetra(n-butyle-orthotitanate, tetra-isopropyle-titanate, tetrakis(2-éthylhexyl)-titanate et dilaurate d'étain di-butyle.

4. Procédé de fabrication d'une composition selon l'une quelconque des revendications 1 à 3, dans lequel le procédé comprend l'étape suivante de :
mise en réaction d'alcool furfurylique
avec un ou plusieurs composés de la formule (II)
Si[OR²]ₐ[OR⁴]_{c} (II)
dans laquelle
a et c sont des nombres entiers choisis parmi 0, 1, 2, 3 et 4, dans lequel un parmi a et c est supérieur à 0,
dans lequel a + c = 4
chacun des a motifs structuraux R² est choisi indépendamment de tous les autres motifs structuraux R² parmi le groupe des radicaux alkyle linéaires et ramifiés,
chacun des c motifs structuraux R⁴ est choisi indépendamment de tous les autres motifs structuraux R⁴ parmi le groupe de motifs structuraux de la formule
-(Si[OR²]_{d}-O)ₙ-Si[OR²]_{f} (III)
dans laquelle
chacun des d+f motifs structuraux R² est choisi indépendamment de tous les autres motifs structuraux R² parmi le groupe des radicaux alkyle linéaires et ramifiés,
d = 2,
f = 3,
n est un nombre entier dans la plage de 1 à 10
à une température dans la plage de 80 °C à 150 °C, de préférence dans la plage de 100 °C à 120 °C,
en présence d'un ou de plusieurs composés choisis parmi le groupe constitué de tri-isopropylate d'aluminium, de tri-n-butylborate, de tetra-n-butyle-orthotitanate, de tetra-isopropyle-titanate, de tetrakis(2-éthylhexyl)-titanate et de dilaurate d'étain di-butyle,
dans lequel une quantité de matière totale de 0,001 mol à 0,05 mol en composés issus du groupe constitué d'alcoolates d'éléments issus du groupe constitué de B, Al, Sn, Ti et Zr et en composés organiques d'éléments issus du groupe constitué de B, Al, Sn, Ti et Zr pour 1 mol de silicium lié dans les composés de la formule (II) est utilisée.

5. Procédé selon la revendication 4, dans lequel
le composé de la formule (II) est choisi parmi le groupe constitué de composés de ce type de la formule (II), dans laquelle
(i) R² est choisi parmi le groupe constitué de groupes méthyle, éthyle, propyle, iso-propyle, butyle et iso-butyle, dans lequel de préférence tous les motifs structuraux R² sont de l'éthyle,
c= 0, a = 4 ;
(ii) R² est choisi parmi le groupe constitué de groupes méthyle, éthyle, propyle, iso-propyle, butyle et iso-butyle, dans lequel de préférence tous les motifs structuraux R² sont de l'éthyle,
a = 3, c = 1,
R⁴ est choisi parmi le groupe constitué de motifs structuraux de ce type de la formule (III), dans laquelle
R² est choisi parmi le groupe constitué de groupes méthyle, éthyle, propyle, iso-propyle, butyle et iso-butyle, dans lequel de préférence tous les motifs structuraux R² sont de l'éthyle,
d = 2, f = 3,
n est un nombre entier dans la plage de 1 à 10.

6. Procédé selon l'une quelconque des revendications 4 ou 5, dans lequel
une quantité de matière de 1 mol à 5 mol, de préférence de 1,53 mol à 5 mol, de manière particulièrement préférée de 2,1 mol à 5 mol d'alcool furfurylique pour 1 mol de silicium lié dans les composés de la formule (II) est utilisée.

7. Utilisation d'une composition selon l'une quelconque des revendications 1 à 3 en tant que liant durcissant par un acide,
- pour un mélange de matières à mouler pour fabriquer un article choisi parmi le groupe constitué de noyaux pour fonderie, de moules pour fonderie et de canaux de distribution,
- dans le procédé d'impression 3D,
- pour un mastic ou une matière d'étanchéité destinés à être utilisés dans le secteur de la construction, de préférence dans la construction de protection contre les acides.

8. Mélange réactionnel, en particulier destiné à former un liant durci par un acide, comprenant
(i) une composition selon l'une quelconque des revendications 1 à 3
(ii) un activateur comprenant
a) un ou plusieurs acides issus du groupe constitué d'acides sulfoniques et d'acide phosphorique,
b) en option d'un ou de plusieurs acides issus du groupe des acides carboxyliques,
c) de l'eau
d) et en option un ou plusieurs composés issus du groupe constitué de monoéthylène glycol, de diéthylène glycol, de polyéthylène glycol et de 1,2-propylène glycol.

9. Mélange réactionnel selon la revendication 8, comprenant en supplément
(iii) une ou plusieurs matières granulaires réfractaires, de manière préférée en une quantité de 80 % ou plus, de manière préférée de 95 % ou plus, par rapport au poids total du mélange réactionnel.

10. Procédé de fabrication d'un article choisi parmi le groupe constitué de noyaux pour fonderie, de moules pour fonderie et de canaux de distribution, comprenant
- la fabrication d'un mélange de matières à mouler comprenant
(i) une composition selon l'une quelconque des revendications 1 à 3,
(ii) un activateur tel que défini dans la revendication 8,
(iii) une ou plusieurs matières granulaires réfractaires,
- le moulage du mélange de matières à mouler,
- le durcissement de la composition (i) par l'activateur (ii).
